**Europäisches Patentamt**

**European Patent Office**

**Office européen des brevets**

(19)

(11) Veröffentlichungsnummer : **0 000 515**
**B1**

(12) ## EUROPÄISCHE PATENTSCHRIFT

(45) Veröffentlichungstag der Patentschrift :
02.12.81

(21) Anmeldenummer : **78100389.2**

(22) Anmeldetag : **13.07.78**

(51) Int. Cl.³ : **C 01 B 17/86, B 01 D 53/34**

(54) **Verfahren zum Abtrennen von Schwefeldioxyd, aus einem Gasstrom und Anlage zur Durchführung des Verfahrens.**

(30) Priorität : **21.07.77 CH 9063/77**

(43) Veröffentlichungstag der Anmeldung :
**07.02.79 (Patentblatt 79/03)**

(45) Bekanntmachung des Hinweises auf die Patenterteilung : **02.12.81 Patentblatt 81/48**

(84) Benannte Vertragsstaaten :
**BE CH FR GB LU NL SE**

(56) Entgegenhaltungen :
**BE - A - 501 481**
**DE - A - 2 510 294**
**SU - A - 172 728**
**CHEMISCHES ZENTRALBLATT,**
**Jrg. 127, 1956, no. 51**
**A. I. APACHOW et al. « Automatische Regulierung der Vorbereitung der Stickstoffoxyde für die Absorption in der Turmschwefelsäureindustrie »,**
**Zusammenfassung Seite 14151**

(73) Patentinhaber : **CIBA-GEIGY AG**
**Patentabteilung Postfach**
**CH-4002 Basel (CH)**

(72) Erfinder : **Fattinger, Volker, Dr.**
**Im Lee 39**
**CH-4144 Arlesheim (CH)**

Imprimerie Jouve, 17, rue du Louvre, 75001 Paris, France

## Verfahren zum Abtrennen von Schwefeldioxyd aus einem Gasstrom und Anlage zur Durchführung des Verfahrens

Die Erfindung betrifft ein Verfahren zum Abtrennen von $SO_2$ aus einem dieses mindestens zeitweilig in zum Ablassen in die Umgebungsluft unzulässig hoher Konzentration enthaltenden Gasstrom unter Gewinnung von Schwefelsäure nach dem Stickoxidverfahren, bei welch letzterem das $SO_2$-haltige Gas zunächst eine Denitrierungszone oder eine als Gasentwässerungszone dienende Vorbehandlungszone und als dann die Denitrierungszone, hierauf den Hauptbereich der $SO_2$-Verarbeitungszone, bestehend aus mindestens einem Fullkörperturm und anschließend eine Stickoxid-Absorptionszone durchströmt, wobei es in mindestens einem der beiden Bereiche der $SO_2$-Verarbeitungszone mit durch den betreffenden Bereich dieser Zone im Kreislauf geführter Dünnsäure von Konzentrationen unterhalb 70 Gew.-% (55° Bé) $H_2SO_4$ in Kontakt gebracht wird, während in der Absorptionszone die in der Denitrierungszone freiwerdenden Stickoxide von Schwefelsäure aufgenommen werden und aus der Absorptionszone nitrosehaltige Säure mit einem Gehalt an 70 bis 85 Gew.-% (55 bis 63,5° Bé) $H_2SO_4$ entnommen und in die Denitrierungszone überführt wird.

Das Stickoxid-Verfahren zur Herstellung von Schwefelsäure ist über 100 Jahre alt. Das Verfahren wird z.B. in den folgenden Büchern beschrieben :

— Winnacker-Küchler, Chemische Technologie, Bd. II Carl Hauser-Verlag, München, 1970, Seite 38 ff.

— Ullmann's Enzyklopaedie der Technischen Chemie, 1964, Bd. 15, Seite 432 ff.

In der zweiten Literaturstelle wird der Begriff « Nitrose-Verfahren » verwendet.

Aus Gründen der Reinhaltung der Luft müssen in neuerer Zeit in vermehrtem Umfang relativ niedrig konzentrierte $SO_2$-Gase verarbeitet werden. Obwohl das Stickoxid-Schwefelsäure-Verfahren bei $SO_2$-Gasen niederer Konzentration bezüglich der Investitions- und Betriebskosten dem Kontaktverfahren überlegen ist, hat sich das Verfahren auch für Zwecke des Umweltschutzes bisher nicht durchsetzen können. Ein Grund dürfte darin liegen, daß es bisher relativ schwierig ist, Stickoxid-Schwefelsäure-Anlagen mit Abgasen nur sehr niedriger Konzentrationen an Stickoxiden zu betreiben, und vor allem so, daß keine gelbe Abgasfahne am Ablaßkamin in die Umgebungsluft sichtbar wird.

Stickoxid-Schwefelsäure-Anlagen bestehen meistens aus mehreren hintereinandergeschalteten Füllkörpertürmen mit verschiedenen Säurekreisläufen. Hohe Stickoxidverluste entstehen sowohl bei einem NO-Ueberschuß als auch einem $NO_2$-Ueberschuß in den Abgasen. Eine optimale Absorption der Stickoxide setzt ein richtiges Verhältnis NO : $NO_2$ voraus. NO ist ein unsichtbares Gas. Man kann daher bei falscher Regelung eines Stickoxid-Schwefelsäure-Systems in kurzer Zeit grosse Mengen an Stickoxiden mit dem Abgas verlieren, ohne daß eine gelbe Fahne sichtbar wird. Es ist bekannt, daß es vorteilhaft ist, eine Stickoxid-Schwefelsäure-System so zu betreiben, daß die Abgase eine kaum merkliche, aber doch erkennbare Gelbfärbung aufweisen. Es sind mehrere Maßnahmen bekannt, um in einem Stickoxid-Schwefelsäure-System den $NO_2$-Gehalt der Abgase zu erhöhen und den NO-Gehalt zu senken :

— vermehrte Zugabe von Salpetersäure,
— Verminderung der Kühlung in den Produktionstürmen,
— vermehrte Zufuhr von Wasser in die Produktionstürme.

Eine in einem Füllkörperturm des Systems vorgenommene Korrekturmaßnahme hat immer Rückwirkungen auf andere Füllkörpertürme und es ist relativ schwierig, das Gesamtsystem im Gleichgewicht zu halten. Aus diesem Grund bedürfen bekannte Stickoxid-Schwefelsäure-Systeme im allgemeinen eines erfahrenen Betriebspersonals um die Anlage mit geringen Stickoxid-Verlusten betreiben zu können.

So ist es bekannt, daß ein Verlust an Stickoxiden aus dem System durch Zugabe von Salpetersäure oder von konzentrierten nitrosen Gasen, wie sie z.B. aus der katalytischen Verbrennung von Ammoniak entstehen, ausgeglichen werden muß (Make-up). In bekannten Stickoxid-Schwefelsäure-Anlagen wird der Zusatz von Salpetersäure oder der Zusatz von starken nitrosen Gasen entweder am Kopf des Denitrierturmes (DE-A-26 09 505) oder vor einem Produktionsturm, welcher mit Säure von mehr als 70 Gew.-% $H_2SO_4$ berieselt ist, durchgeführt. Die Notwendigkeit des Zusatzes von Salpetersäure oder starken nitrosen Gasen erkennt man in bekannten Stickoxid-Schwefelsäure-Systemen vor allem am Nitrosegehalt der aus der Absorptionszone in den Sumpf dieser Zone abfließenden Säure. Sie hat den höchsten Nitrosegehalt aller im System vorhandenen Säuren.

In der nachfolgenden Beschreibung der Erfindung werden alle Türme eines Systems, welche mit einer Säure über 70 Gew.-% $H_2SO_4$ (Absorptionssäure) berieselt werden und Gas mit mehr gasförmigen Stickstoffverbindungen abgeben als im Eintrittsgas des Turmes enthalten sind, zur Denitrierzone gerechnet. Sogennante « Produktionstürme » einer PETERSEN-Turmanlage, welche dieser Bedingung entsprechen, werden also definitionsgemäß als der Denitrierzone zugehörig betrachtet. Ob die Säure im Ablauf eines Turmes nitrosehaltig oder frei von Nitrose ist, wird nicht als Kriterium für die Bezeichnung « Denitrierturm » oder « Denitrierapparat » herangezogen. Der weiter unten erläuterte vorgeschaltete Gas-Trockenturm wird mit Säure unter 70 Gew.-% $H_2SO_4$ berieselt und daher nicht zur Denitrierzone gerechnet, auch dann nicht, wenn er gasförmige Stickoxide abgibt.

In bekannten Stickoxid-Schwefelsäure-Anlagen findet ein Zusatz von Salpetersäure oder anderen stickoxidhaltigen Substanzen an irgendeiner Stelle der soeben definierten Denitrierzone statt. Die Regelung der Farbe der Abgase des Systems, das heißt, die Steuerung des Verhältnisses NO: $NO_2$ in den Abgasen, erfolgt in den meisten Fällen bei bekannten Stickoxid-Schwefelsäure-Anlagen durch Zusatz von mehr oder weniger Wasser in den Säurekreislauf durch die Denitrierzone und die Stickoxid-Absorptionszone.

Es ist daher eine laufende Ueberwachung der Anlage mit vielen Analysen der Dichte und des Nitrosegehaltes der umlaufenden Säuren erforderlich, und es ist kaum möglich, eine Automatisierung der Regelung des bekannten Systems herbeizuführen. Ein weiterer Nachteil bekannter Stickoxid-Schwefelsäure-Systeme besteht in ihrer großen Trägheit genenüber Korrekturmaßnahmen. Wenn z.B. durch einen Abfall des $SO_2$-Gehaltes der Eintrittsgase eine gelb gefärbte Abgasfahne nach dem System entsteht, verlangt dies Korrekturmaßnahmen, die erst nach mehreren Stunden wirksam werden und diese gelbe Abgasfahne wieder zum Verschwinden bringen.

Wie in der GB-A-759 056 (Saint-Gobain) schon 1956 festgestellt wurde, liefert die Differenz zwischen den Temperaturen der Gase am Eingang und am Ausgang der Serie von Reaktionskammern der $SO_2$-Verarbeitungszone, welche Differenz laut der US-A-1 486 757 (Jensen) aus dem Jahre 1924 gemessen werden sollte, um Verluste an Stickoxiden festzustellen und durch Einleiten von Salpetersäure z.B. in die erste $SO_2$-Verarbeitungskammer auszugleichen, kein zuverlässiges Kriterium, da diese Temperaturdifferenz nicht nur vom mehr oder weniger richtigen Funktionieren der Anlage sondern auch von den täglichen Schwankungen der Aussentemperatur abhängig ist. Im übrigen würde diese Methode auch bei Intensiv-Verfahren zur Schwefelsäureherstellung, wie z.B. demjenigen der DE-A-26 09 505 und dem Verfahren der vorliegenden Erfindung nicht anwendbar sein, da die hierbei auftretenden Temperaturdifferenzen zur Steuerung des Systems viel zu gering wären.

Darum wird in der genannten GB-PS empfohlen

(α) den $NO_x$-Gehalt in der Mitte und am Eingang der $SO_2$-Verarbeitungszone zu messen und

(β) Aenderungen im $NO_x$-Gehalt durch Aenderungen in der Dichte der umlaufenden Säure auszugleichen, wozu Salpetersäure in die Denitrierungszone eingeführt werden soll. Jedoch würde eine solche Massnahme, welche auch in der DE-A-26 09 505 empfohlen wird, keineswegs die Reaktivität der Dünnsäure in der $SO_2$-Verarbeitungszone in einem System nach der DE-A-26 09 505 beeinflussen.

Die DE-C-1 140 909 (Ruhr-Schwefelsäure GmbH) beschreibt eine Anpassung des Verhältnisses von NO: $NO_2$ und des Gehaltes an NO+ $NO_2$ in der Gasphase durch entgegengesetzte Aenderung in der Dichte der Säure. Solche Aenderungen sollen die wirkungsvollste Massnahme zur Beeinflussung der Oxidationsgeschwindigkeit des Verfahrens darstellen.

Aenderungen im Nitrosegehalt würden dabei laut dieser Patenschrift mit der nötigen Schnelligkeit während des Betriebes der Anlage erfolgen. Jedoch ist die Säure, welche im System nach dieser Patentschrift zirkuliert, eine starke Säure mit einem Gehalt von 80 Gew.-% $H_2SO_4$, und keine Dünnsäure von weniger als 70 Gew.-% $H_2SO_4$, wie sie in der $SO_2$-Verarbeitungszone der DE-A-26 09 505 zirkuliert.

Es ist ein Hauptziel der Erfindung, ein Problem zu lösen, welches insbesondere bei der Schwefelsäureherstellung nach dem in der DE-A-26 09 505 beschriebenen Intensiv-Verfahren auftritt und in einer Abnahme der Reaktivität der durch die $SO_2$-Verarbeitungszone des Systems zirkulierenden Dünnsäure besteht. Dies Problem trat in früheren Prozessen nicht auf. Weiter hat die Erfindung das Ziel, ein verbessertes, sehr rasches Anpassen des NO : $NO_2$-Verhältnisses im aus dem System abgegebenen Abgas zu erreichen, sodass dieses Abgas das System praktisch ohne Bildung einer durch die Anwesenheit von $NO_2$ im Abgas verursachten gelben Fahne verlässt, während gleichzeitig auch unzulässige Verluste an farblosem NO aus dem System vermieden werden.

Ein weiteres Ziel der Erfindung besteht darin, eine verbesserte Emission von Gasen aus dem genannten System zu erreichen, in welchen der Gehalt an Stickoxiden unterhalb einer gesetzlich vorgeschriebenen Höchstgrenze (z.B. 400 ppm) liegt.

Durch die im folgenden erläuterte Erfindung wird auch vor allem die Aufgabe gelöst, die Zusammensetzung der Abgase eines Stickoxid-Schwefelsäure-Systems innerhalb weniger Minuten zu korrigieren und ausserdem eine Automatisierung des Gesamtsystems zu ermöglichen.

Die Erfindung wird vorzugsweise bei dem eingangs beschriebenen Verfahren angewandt, das insbesondere in den DE-A-25 10 294 und 26 09 505 beschrieben ist.

Nach der Erfindung werden die vorangehend beschriebenen Aufgaben gelöst und die angegebenen Ziele erreicht durch ein Verfahren der eingangs beschriebenen Art, das dadurch gekennzeichnet ist, dass

(a) der Gehalt an NO im Gasstrom in der Absorptionszone oder stromab der Absorptionszone oder gleichzeitig sowohl in der Absorptionszone als auch stromab derselben gemessen wird, und dass

(b) beim Ueberschreiten eines bestimmten NO-Grenzgehalts oder bei Ueberschreiten eines Steilheitsgrenzwertes des Anstiegs je Zeiteinheit der NO-Gehalts im Gasstrom an der oder den NO-Messstellen in den Dünnsäurekreislauf mindestens eines der beiden Bereiche der $SO_2$-Verarbeitungszone eine weiter unten näher definierte Stickstoff-Sauerstoff-Verbindung in einer bestimmten Menge eindosiert wird, die einerseits ausreicht um die Ueberschreitung des genannten NO-Grenzgehalts oder Steilheitsgrenzwertes zu beseitigen, aber andererseits nahe an den genannten Grenzwerten verbleibt, wobei eine Aenderung der Säurekonzentration in der Absorptionszone praktisch vermieden wird, und wobei für den Fall, dass eine gasförmige Stickstoff-Sauerstoffverbindung verwendet wird, diese zuerst in Dünnsäure gelöst und letztere dann, wie oben beschrieben, in den Dünnsäurekreislauf eindosiert wird.

Der spezifische Betrag des NO-Grenzgehalts bzw. des Steilheitsgrenzwertes kann nicht generell angegeben werden, sondern hängt von der Anlage und insbesondere von der Grösse der verschiedenen Reaktionsapparate (Türme) ab. Es ist bei der Produktion von Schwefelsäure nach dem Stickoxidverfahren und insbesondere bei Petersens Intensiv-Turmverfahren in jedem Fall erforderlich, die Bedingungen festzustellen, unter welchen sich der Betrieb einer Anlage optimal abspielt, und dabei die Messgeräte für die Kontrolle der genannten Grenzwerte so einzustellen, dass sie diesem optimalen Betrieb entsprechen.

Es wurde gefunden, dass innerhalb weniger Minuten ein optimales $NO : NO_2$-Verhältnis in der Absorptionszone bzw. in den Abgasen der Absorptionszone herbeigeführt werden kann, und dass es ausserdem möglich ist, das gesamte System zu automatisieren, wenn die Salpetersäure oder andere flüssige oder gasförmige Substanzen, welche an Sauerstoff gebundenen Stickstoff enthalten, in Abhängigkeit vom NO-Gehalt der Gase, welche die Absorptionszone verlassen, in die Dünnsäure oder die mit Dünnsäure berieselte $SO_2$-Verarbeitungszone dosiert werden. Die Dünnsäure verliert zugesetzte Salpetersäure oder andere stickoxidhaltige Verbindungen relativ rasch. Dabei wird während des Verbrauches des Stickstoffgehaltes der Dünnsäure eine überraschend starke Reaktion ausgelöst, wodurch eine Beschleunigung der $SO_2$-Verarbeitung herbeigeführt wird.

Die erfinderischen Massnahmen stellen nicht etwa einen reinen « Make-up » als Antwort auf einen Anstieg des NO-Gehalts infolge eines zu geringen $NO_x$-Gehalts im System dar. Vielmehr zeigt der Anstieg des NO-Gehalts, wie er erfindungsgemäss gemessen wird, beim vorliegenden System vor allem eine Abnahme der Aktivität (= Fähigkeit der Dünnsäure der Grenzfläche zwischen Flüssigkeit und Gasphase die Reaktion von $SO_2$ zu Schwefelsäure herbeizuführen) der in einem der Sektoren oder in beiden Sektoren der $SO_2$-Verarbeitungszone zirkulierenden Dünnsäure an.

Durch Zugabe verhältnismässig kleiner Mengen von Salpetersäure oder dergl. Stickstoff-Sauerstoff-Verbindung wird die Aktivität der Dünnsäure in der $SO_2$-Verarbeitungszone gerade hinreichend stimuliert, um die Umwandlung von $SO_2$ in $SO_3$ bzw. Schwefelsäure weiterzuführen, und zwar überraschenderweise auch dann, wenn in der Gesamtbilanz des Systems ein Mangel an Stickoxiden auftritt. Dies erlaubt es, das System praktisch bei einem Mindestniveau des $NO_x$-Gehalts, also unter Vermeidung jedes Ueberschusses an $NO_x$ zu betreiben. Die genannte Stimulierung ist weit grösser, als aus der geringfügigen Erhöhung des $NO_x$-Gehalts im System, wie sie infolge der Massnahmen (a) und (b) eintritt, zu erwarten war.

Veränderungen wie sie im System auftreten, insbesondere auch solche, die durch Schwankungen im $SO_2$-Gehalt des Eintrittsgases eintreten werden innerhalb weniger Sekunden ausgeglichen, und der stimulierende Effekt jeder kleinen Zugabe an Stickstoff-Sauerstoff-Verbindung dauert etwa 10 bis 15 Minuten je nach zirkulierender Dünnsäuremenge.

Die oben unter (a) und (b) definierten Massnahmen sind daher nicht in erster Linie dazu bestimmt, den $NO_x$-Gehalt des Systems so zu erhöhen, dass ein Mangel in der Gesamtbilanz an $NO_x$ im System ausgeglichen wird (Make-up), sondern wie gesagt, die Aktivität der in der $SO_2$-Verarbeitungszone zirkulierenden Dünnsäure zu stimulieren, jedesmal wenn ein Absinken dieser Aktivität durch die genannte Massnahme (a) angezeigt wird.

Für die Erfindung ist es wesentlich, dass die Salpetersäure oder die Stickoxide in die flüssige Phase (der Dünnsäure) gebracht werden. Die Stickstoff-Sauerstoff-Verbindung enthaltende Flüssigkeit (z.B. Salpetersäure) kann entweder direkt mit der Dünnsäure vermischt oder in die mit Füllkörpern versehene $SO_2$-Verarbeitungszone eingeführt werden, und zwar so, dass auf den vorzugsweise mit Füllkörpern gefüllten Reaktionsapparaten dieser Zone eine Vermischung zwischen zugesetzter Flüssigkeit und Dünnsäure stattfindet.

« Stickstoff-Sauerstoff-Verbindungen » sind diejenigen Verbindungen, welche im Stickoxidverfahren normalerweise auftreten oder verwendet werden, also NO, $NO_2$, $N_2O_3$, Nitrose oder Salpetersäure und gegebenenfalls auch feste « Kammerkristalle ». Salpetrige Säure wird im Stickoxidverfahren sofort zu Salpetersäure oxidiert, oder gibt $N_2O_3$ ab oder bildet mit Salpetersäure Nitrose.

Gasförmige Substanzen, die an Sauerstoff gebundenen Stickstoff enthalten, sind also NO- oder $NO_2$- bzw. $N_2O_3$-haltige Gase, flüssige Substanzen sind insbesondere Salpetersäure selbst oder nitrosehaltige Schwefelsäure.

Vorzugsweise wird die Menge an dosierter, Stickstoff-Sauerstoff-Verbindung enthaltender Substanz erhöht, in dem Masse wie der NO-Gehalt des Gasstromes in oder nach der Absorptionszone ansteigt.

In einfacheren Anlagen kann aber auch die Zuflussrate an Stickstoff-Sauerstoff-Verbindung enthaltender Substanz konstant gehalten werden, solange der NO-Gehalt des Gasstroms in oder stromab der Absorptionszone den Grenzgehalt an NO übersteigt.

Die bei jeder Korrekturmassnahme dem Vorbehandlungsteil oder dem Hauptteil der $SO_2$-Verarbeitungszone zugesetzte Menge an Stickstoff-Sauerstoff-Verbindung ist im Vergleich zum Gesamtbetrag der im System umlaufenden Nitrose nur sehr klein.

Bei einem System, in welchem 100 Tonnen Säure zirkulieren und bei welchem der Gehalt an Nitrose in der Säurephase 3 Gewichts-% beträgt, laufen demnach etwa 3 Tonnen Nitrose im System um. Die erfindungsgemäss vorgenommene Korrekturmassnahme bei Ansprechen auf einen an den unter (a) angegebenen Punkten gemessenen Anstieg des NO-Gehalts bedingt die Zugabe von etwa 100 bis 1 000 ml Salpetersäure oder dergl. Stickstoff-Sauerstoff-Verbindung zur durch die $SO_2$-Verarbeitungszone zirkulierenden « Dünnsäure ». Solche geringfügigen Mengen bewirken den gewünschten Korrektureffekt in weniger als einer Minute, und stellen keineswegs einen « Make-up » von in der Gesamtbilanz an $NO_x$ im System auftretenden Verlusten dar. Das letztere würde den Zusatz wesentlich grösserer Mengen an nitrosehaltiger Säure oder Salpetersäure verlangen, wobei ein solcher Zusatz wie bei den bekannten Intensiv-Verfahren üblich vorzugsweise in der Denitrierungszone erfolgt.

Bei einer anderen Arbeitsweise wird die Menge an zudosierter Stickstoff-Sauerstoff-Verbindung enthaltender Substanz in dem Masse erhöht, wie ein Steilheitsgrenzwert des Anstiegs je Zeiteinheit des NO-Gehalts im Gasstrom in oder stromab der Absorptionszone überschritten wird. Bevorzugt wird als Stickstoff-Sauerstoff-Verbindung Salpetersäure verwendet.

Daneben besteht die Stickstoff-Sauerstoff-Verbindung vorzugsweise aus durch Ammoniakverbrennung erzeugten Stickoxiden.

Die genannte Substanz kann insbesondere durch Absorption von Stickoxiden in Schwefelsäure gebildet werden.

Die Zudosierung der genannten Substanz wird vorzugsweise unterbrochen, wenn der NO-Gehalt des Gasstroms stromab oder Absorptionszone unter einen festgelegten Wert absinkt, der tiefer liegt als der vorgenannte Grenzgehalt an NO ; oder die Zudosierung der genannten Substanz wird vermindert, wenn ein vorbestimmter Steilheitsgrenzwert des Abfalls je Zeiteinheit des NO-Gehalts im Gasstrom stromab der Absorptionszone unterschritten wird, wobei der letztgenannte Steilheitsgrenzwert etwa dem Steilheitsgrenzwert nach (b) entspricht.

Bei besonders vorteilhaftem Betrieb kann :

(a) zusätzlich die $NO_2$-Konzentration des Gasstroms stromab der Absorptionszone gemessen werden und

(b) bei Ueberschreiten eines bestimmten $NO_2$-Gehalts oder bei Ueberschreiten einer Steilheitsgrenze des Anstiegs des $NO_2$-Gehalts im Gasstrom an der $NO_2$-Meßstelle die Eindosierung der genannten Substanz in den Dünnsäurekreislauf der $SO_2$-Verarbeitungszone unterbrochen werden.

Auch kann hierbei :

(c) bei Ueberschreiten eines zweiten, höheren Grenzwertes des $NO_2$-Gehalts im Gasstrom stromab der Absorptionszone oder bis Ueberschreiten einer zweiten, höheren Steilheitsgrenze des Anstieges des $NO_2$-Gehalts im Gasstrom stromab der Absorptionszone die Menge der aus der letzteren Zone ausfließenden nitrosehaltigen Säure gesteigert und entsprechend aus der Denitrierzone stammende nitrosearme oder nitrosefreie Säure in die Absorptionszone eingeführt werden.

Mindestens ein Teil der in die $SO_2$-Verarbeitungszone eingeführten Substanz kann aus aus der Absorptionszone entnommener nitrosehaltiger Schwefelsäure bestehen, wobei insbesondere der Gehalt der aus der Absorptionszone entnommenen und in die $SO_2$-Verarbeitungszone einzudosierenden nitrosehaltigen Schwefelsäure an Stickstoff-Sauerstoff-Verbindung durch Zugabe von Salpetersäure erhöht werden kann.

Bei einer besonders bevorzugten Durchführungsweise des erfindungsgemäßen Verfahrens wird vor die Denitrierzone eine von einem separaten Dünnsäurekreislauf durchströmte Vorbehandlungszone vorgeschaltet, durch welche der Gasstrom vor Einleitung in die Denitrierungszone hindurch geleitet wird, und ein Teil oder die Gesamtmenge an Stickstoff-Sauerstoff-Verbindung enthaltender Substanz wird in diese Vorbehandlungszone eingeleitet. Der in die Vorbehandlungszone eingeleitete Anteil der genannten Substanzmenge kann aus einer aus der Absorptionszone in die $SO_2$-Verarbeitungszone fließenden nitrosehaltigen Schwefelsäure abgezweigt werden. Mindestens ein Teil der in die Vorbehandlungszone einzuleitenden Substanzmenge kann aus durch Ammoniakverbrennung erzeugten gasförmigen Stickoxiden bestehen, die in den Gasstrom vor dessen Eintritt in die Vorbehandlungszone eingeleitet werden.

Der Gehalt der aus der Absorptionszone entnommenen und teils in den Hauptbereich der $SO_2$-Verarbeitungszone und teils in die Vorbehandlungszone einzuleitenden nitrosehaltigen Schwefelsäure an Stickstoff-Sauerstoff-Verbindungen kann auch in diesem Fall durch Zugabe von Salpetersäure erhöht werden.

Weiter kann die Dichte der aus der Denitrierungszone austretenden Säure durch Zusatz von Dünnsäure oder Wasser konstant gehalten werden, während die Dichte der den Hauptbereich der $SO_2$-Verarbeitungszone im Kreislauf durchströmenden Dünnsäure durch Zusatz von Säure aus der Vorbehandlungszone oder von Wasser konstant gehalten werden kann.

In einem weiteren Aspekt betrifft die Erfindung eine Anlage zum Abtrennen von $SO_2$ aus einem dieses mindestens zeitweilig in zum Ablassen in die Umgebungsluft unzulässig hoher Konzentration enthaltenden Gasstrom unter Gewinnung von Schwefelsäure nach dem Stickoxidverfahren, welche Anlage mindestens nacheinander umfaßt :

(a) eine Denitrierungszone

(b) eine $SO_2$-Verarbeitungszone und

(c) eine Stickoxid-Absorptionszone

mit je Zone mindestens einem Gas-Flüssigkeits-Reaktionsapparat, der mit einem für die Aufnahme von aus dem unteren Ende des betroffenen Apparates austretender Flüssigkeit dienenden Sumpf versehen ist,

(d) eine Leitung für den Gasstrom, welche nacheinander am einen, vorzugsweise unteren Ende der Denitrierungszone in diese eintritt und vom einen, vorzugsweise oberen Ende der letzteren zur SO$_2$-Verarbeitungszone und von der letzteren zur Stickoxid-Absorptionszone und schließlich vom einen, vorzugsweise oberen Ende der letzteren Zone ins Freie führt,

(e) eine Kreislaufleitung für Dünnsäure durch die SO$_2$-Verarbeitungszone, und schließlich

(f) eine Kreislaufleitung für Säure vom in Gasstromflußrichtung ersten Sumpf der Stickoxid-Absorptionszone zum einen, vorzugsweise oberen Ende der Denitrierungszone und vom Sumpf der letzteren zurück zum einen, vorzugsweise oberen Ende eines Reaktionsapparats der Stickoxid-Absorptionszone, wobei die erfindungsgemäße Anlage dadurch gekennzeichnet ist, daß

(g) an die Dünnsäure-Kreislaufleitung durch die SO$_2$-Verarbeitungszone eine Zuleitung für Stickstoff-Sauerstoff-Verbindung in flüssiger oder gasförmiger Phase angeschlossen ist, daß

(h) eine Meßeinrichtung zum Messen des Gehalts an NO im Gasstrom, die an die Absorptionszone oder an die Leitung (d) für den Gasstrom stromab der Absorptionszone oder gleichzeitig an die Absorptionszone und an die Leitung stromab der Absorptionszone angeschlossen ist, und daß

(i) eine Regeleinrichtung, welche die Zugabe von Stickstoff-Sauerstoff-Verbindung durch die Zuleitung in Abhängigkeit von den durch die Meßeinrichtung ermittelten NO-Gehalten dosiert, vorgesehen sind.

Eine weiter verfeinerte Ausführungsform der erfindungsgemäßen Anlage ist dadurch gekennzeichnet, daß eine NO$_2$-Meßeinrichtung zum Messen des NO$_2$-Gehalts im Gasstrom, die an die Absorptionszone oder an die Leitung für den Gasstrom stromab der Absorptionszone angeschlossen ist, vorgesehen ist, und daß die Regeleinrichtung

(k) eine übergeordnete Regelvorrichtung umfaßt, welche die Zufuhr von Stickstoff-Sauerstoff-Verbindung über die Zuleitung gemäß (g) in Abhängigkeit vom durch die NO$_2$-einrichtung gemessenen NO$_2$-Gehalt im Gasstrom unterbricht oder vermindert.

In bevorzugten Ausführungsformen der obigen Anlage kann die Zuleitung zur Aufnahme der Stickstoff-Sauerstoff-Verbindung in Form von nitrosehaltiger Schwefelsäure an den Sumpf eines Reaktionsapparats der Stickoxid-Absorptionszone angeschlossen sein.

In der letztgenannten Zuleitung kann eine Einleitungseinrichtung für Salpetersäure vorgesehen sein.

Eine solche bevorzugte Anlage nach der Erfindung kann eine der Denitrierzone vorgeschaltete Vorbehandlungszone mit Reaktionsapparat und Sumpf umfassen, wobei die Leitung für den Gasstrom zuerst in diese Vorbehandlungszone vorzugsweise an deren unterem und vom anderen Ende derselben zu einen, vorzugsweise unteren Ende der Denitrierzone führt und wobei eine separate, durch die Vorbehandlungszone von oben nach unten führende Kreislaufleitung für Dünnsäure sowie eine Ausgleichsleitung zwischen den Sümpfen der Vorbehandlungszone und der Denitrierzone vorgesehen ist, und wobei eine Zweigleitung aus der genannten Zuleitung zum oberen Ende der Vorbehandlungszone vorgesehen sein kann.

Auch kann eine Ammoniakverbrennungsanlage mit einer zur mindestens teilweisen Aufnahme der darin entwickelten Stickoxide in Schwefelsäure dienenden Kolonne vorgesehen sein, und eine Ueberführungsleitung kann den Fuß der Kolonne mit dem einen, vorzugsweise oberen Ende eines in Gasstromrichtung ersten Reaktionsapparates der SO$_2$-Verarbeitungszone zwecks Zuführen stickoxidhaltiger Schwefelsäure in die letztere Zone verbinden.

Weiter kann eine solche Anlage eine der Denitrierzone vorgeschaltete Vorbehandlungszone der oben beschriebenen Art umfassen, wobei eine Zuleitung für stickoxidhaltige Gase das obere Ende der Kolonne der Ammoniakverbrennungsanlage mit dem den Gasstrom in das vorzugsweise untere Ende der Vorbehandlungszone einführenden Teil der Leitung verbindet.

Die unter (g) erwähnte Zuleitung kann zwecks Aufnahme der Stickstoff-Sauerstoff-Verbindung in Form von nitrosehaltiger Schwefelsäure an den Sumpf eines Reaktionsapparates der Stickoxid-Absorptionszone angeschlossen sein, und eine Zweigleitung kann aus der letztgenannten zum oberen Ende der Kolonne der Ammoniakverbrennungsanlage führen.

Diese Zweigleitung aus der Zuleitung gemäß (g) kann mit einem weiteren Unterzweig an das obere Ende der Vorbehandlungszone angeschlossen sein.

Weitere Einzelheiten der Erfindung sind aus der folgenden Beschreibung im Zusammenhang mit den beigefügten Zeichnungen ersichtlich, in welchen :

Fig. 1 eine erste, besonders einfache Ausführungsform einer erfindungsgemäßen Anlage,

Fig. 2 eine zweite, der in Fig. 1 gezeigten ähnliche Ausführungsform, aber mit Vorbehandlungszone, wobei Stickstoff-Sauerstoff-Verbindung aus der Stickoxid-Absorptionszone nur in die genannte Vorbehandlungszone eingeführt wird ;

Fig. 3 eine dritte Ausführungsform mit Vorbehandlungszone, wobei Stickstoff-Sauerstoff-Verbindung sowohl in die Vorbehandlungszone als auch in den Hauptbereich der SO$_2$-Verarbeitungszone eingeführt wird, und außerdem eine Meßeinrichtung für NO$_2$ vorgesehen ist ;

Fig. 4 eine weitere, der in Fig. 3 gezeigten ähnliche Ausführungsform mit Vorbehandlungszone sowie mit einer Ammoniakverbrennungsanlage zur zusätzlichen Stickoxiderzeugung ; und schließlich

Fig. 5 eine Ausführungsform ähnlich derjenigen nach Fig. 4, in welcher aber, ähnlich wie bei den Anlagen nach Figuren 2 und 3, Stickstoff-Sauerstoff-Verbindung enthaltende Säure aus der Absorptionszone sowohl in die Vorbehandlungszone als auch in den Hauptteil der SO$_2$-Verarbeitungszone eingeführt werden kann.

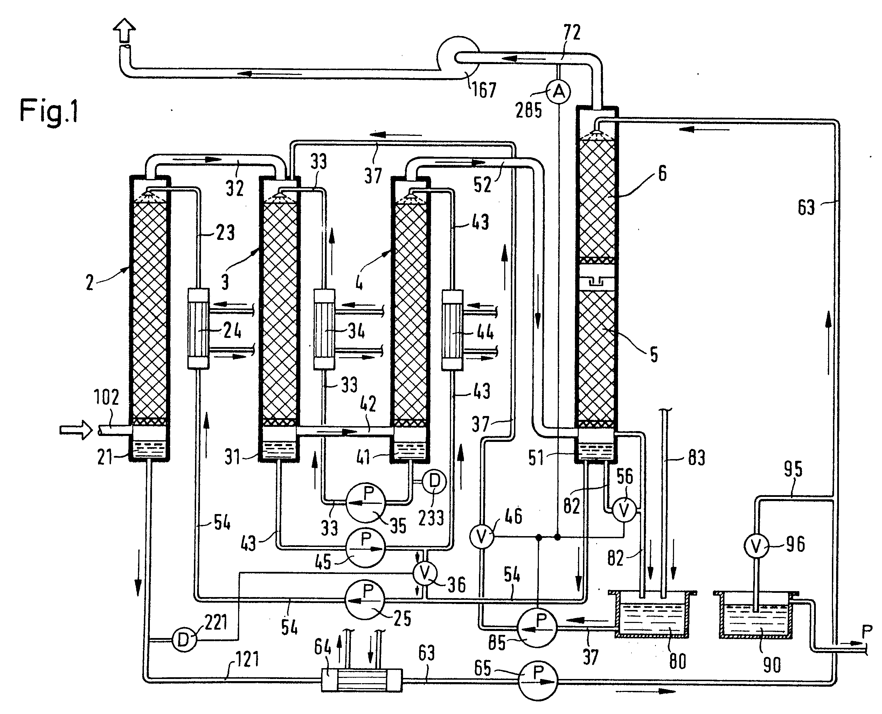

In der in Fig. 1 beschriebenen einfachsten Ausführungsform der erfindungsgemäßen Anlage eines Stickoxid-Schwefelsäure-Systems umfaßt diese die üblichen mit Füllkörperschichten versehenen Gas-Flüssigkeits-kontaktapparate, die im folgenden der Einfachheit halber als « Türme » bezeichnet sind.

Auf den Denitrierturm 2 folgt in Gasströmungsrichtung die SO$_2$-Verarbeitungszone mit einem ersten Turm 3 und nachfolgendem zweiten Turm 4 und auf diesen die in einen einzigen Turm vereinigten Füllkörperschichten 5 und 6 der Stickoxid-Absorptionszone. Aehnlich wie bei der in der DE-A-26 09 505 beschriebenen Anlage wird das zu behandelnde SO$_2$-haltige Abgas über die Einlaßleitung 102 in das untere Ende des Denitrierturmes 2 eingeleitet und gelangt über die Leitung 32 vom oberen Ende des Turmes 2 in das obere Ende des Turmes 3 der SO$_2$-Verarbeitungszone, vom unteren Ende des Turmes 3 durch die Gasleitung 42 in das untere Ende des Turmes 4 derselben Zone und vom oberen Ende des Turmes 4 durch die Gasleitung 52 in das untere Ende des Turmes mit der Füllkörperschicht 5 und anschliessend in das untere Ende der Füllkörperschicht 6 des gleichen Turmes und vom oberen Ende der letztgenannten Füllkörperschicht über die Abgasleitung 72 mit Hilfe des Gebläses (Ventilators) 167 ins Freie.

Wie in der vorgenannten bekannten Anlage wird auch bei der in Fig. 1 gezeigten Anlage Dünnsäure im Kreislauf durch die Dünnsäureleitung 33 mittels einer Pumpe 35 über einen Wärmeaustauscher 34 auf das obere Ende der Füllkörperschicht des Turmes 3 gepumpt und sammelt sich am unteren Ende dieses Turmes im Sumpf 31 von welchem die Dünnsäure mittels der Pumpe 45 durch die Leitung 43 und den Wärmeaustauscher 44 auf das obere Ende der Füllkörperschicht des Turmes 4 hinaufgepumpt wird. Der Dünnsäurekreislauf durch die SO$_2$-Verarbeitungszone wird durch Abpumpen der Dünnsäure aus dem Sumpf 41 des Turmes 4 über die Leitung 33 geschlossen. Bevorzugt wird als Dünnsäure in diesem Kreislauf Schwefelsäure von etwa 65 Gew.-% H$_2$SO$_4$ verwendet.

Die Dichte der Kreislaufsäure in der SO$_2$-Verarbeitungszone wird durch das Dichte-Meßgerät 233 am Austritt der Dünnsäure aus dem Sumpf 41 gemessen. Zur Regelung der Dichte kann entweder Wasser oder auch Säure in an sich bekannter Weise herangezogen werden. Die entsprechenden Ventile und Leitungen sind jedoch aus der Figur 1 der besseren Uebersicht halber weggelassen.

Aehnlich wie in der bekannten Anlage wird aus dem Sumpf 51 des gemeinsamen Turmes der Stickoxid-Absorptionszone, der unterhalb der Füllkörperschicht 5 vorgesehen ist, über die Leitung 54 mit Hilfe der Pumpe 25 nitrosehaltige

Schwefelsäure in den Wärmeaustauscher 24 und nach Aufheizen in letzterem durch die Säureleitung 23 auf das obere Ende der Füllkörperschicht des Denitrierturmes 2 aufgesprüht. nach Durchlaufen der Füllkörperschicht des Turmes 2 sammelt sich die denitrierte Säure im Sumpf 21 dieses Turmes und wird mit Hilfe der Pumpe 65 durch die Leitung 121 zum Wärmeaustauscher 64 und von dem letzteren durch die Leitung 63 zum oberen Ende der Füllkörperschicht 6 des Turmes der Stickoxid-Absorptionszone hinaufgepumpt.

Die Säure aus der Füllkörperschicht 6 fließt direkt auf die Füllkörperschicht 5, während das zu behandelnde Gas aus der Füllkörperschicht 5 direkt in die Füllkörperschicht 6 gelangt. In diesem Fall ist also zwischen den beiden Füllkörperschichten kein Gasverschluss erforderlich.

Aus der Leitung 63 kann denitrierte Schwefelsäure mit einem Gehalt von 70-85 Gew.-% H$_2$SO$_4$ über die Leitung 95 und das Ventil 96 in den Säurebehälter 90 abgezweigt und über die Entnahmeleitung bei P aus der Anlage entnommen werden.

Der Verfahrensschritt der Denitrierung erfolgt also in bekannter Weise in der Füllkörperschicht des Turmes 2. Der verfahrensschritt der SO$_2$-Verarbeitung erfolgt in den Füllkörperschichten der Türme 3 und 4 und der Verfahrensschritt der Stickoxid-Absorption in den Füllkörperschichten der Türme 5 und 6. In der SO$_2$-Verarbeitungszone (Türme 3 und 4) wird eine Schwefelsäure von weniger als 70 Gew.-% H$_2$SO$_4$ verwendet (Dünnsäure). In der Denitrierzone (Turm 2) und in der Stickoxid-Absorptionszone (Türme 5 und 6) wird eine Säure zwischen 70 und 85 Gew.-% H$_2$SO$_4$ (Absorptionssäure) verwendet. Vorzugsweise beträgt die Konzentration der Absorptionssäure 72 bis 80 Gew.-% H$_2$SO$_4$. Wie beim bekannten Stickoxid-Schwefelsäure-Verfahren wird auch im Verfahren der Erfindung in der Denitrierzone Stickoxid aus der zugeführten Säure freigesetzt und gelangt über den Gasweg in die Absorptionszone, wo das gasförmige Stickoxid von Schwefelsäure absorbiert wird. Gemäß Figur 1 findet dieser Vorgang wie folgt statt : die nitrosefreie Absorptionssäure, welche aus der Füllkörperschicht des Turmes 2 in den Sumpf 21 fließt, wird im Kühler 64 gekühlt und gelangt über die Pumpe 65 und die Leitung 63 auf die Füllkörperschicht 6 und fließt dann in die Füllkörperschicht 5 und von dort in den Sumpf 51 und danach über die Leitung 54 zur Pumpe 25 und über den Säureerhitzer 24 und die Leitung 23 zurück zur Füllkörperschicht des Turmes 2, wo die Stickoxide, welche in den Schichten der Türme 5 und 6 aufgenommen worden sind, wieder an das Gas abgegeben werden.

In bekannter Weise wird außerdem zur Verstärkung des Stoffaustausches zwischen dem Gas und der Säure zusätzlich aus den Sümpfen der Türme Säure zum Kopf desselben Turmes gepumpt. Die entsprechenden Vorrichtungen sind jedoch nicht gezeigt um das Schema zu vereinfachen ; es sind nur jene Säureleitungen im Schema angegeben, welche einen Säureaustausch zwischen verschiedenen Füllkörperschichten herbeiführen.

Erfindungsgemäß ist nun in der Anlage nach Fig. 1 ein Behälter 80 vorgesehen, in welchem sich Salpetersäure oder eine Schwefelsäure mit einem hohen Gehalt an Nitrose und/oder Salpetersäure befindet. Die Salpetersäure wird durch die Leitung 83 in den Behälter 80 geleitet.

Eine mit einem Ventil 56 versehene Leitung 82 ist an den Sumpf 51 der Stickoxid-Absorptionszone angeschlossen und mündet in den Behälter 80. Nitrosehaltige Schwefelsäure kann durch die Leitung 82 in den Behälter 80 abgelassen werden. Der letztere Behälter ist nun erfindungsgemäß über die Leitung 37, in der die Pumpe 85 und das Ventil 46 vorgesehen sind, mit dem oberen Ende des ersten Turmes 3 der SO$_2$-Verarbeitungszone verbunden.

Ein Analysengerät 285 mißt kontinuierlich den NO-Gehalt der aus der Füllkörperschicht 6 des Turmes der Absorptionszone abströmenden Gase. Sobald der NO-Gehalt über einen zulässigen Wert ansteigt, oder falls der Anstieg der Konzentration an NO über eine festgelegte Geschwindigkeit hinaus erfolgt, wird die Pumpe 85 in Betrieb gesetzt, und stark salpetersäurehaltige Schwefelsäure fließt über das Ventil 46 und die Leitung 37 in die Füllkörperschicht des Turmes 3.

Sobald das Analysengerät 285 anzeigt, daß der NO-Gehalt der Gase, welche die Absorptionszone verlassen, unter einen festgelegten Wert abgesunken ist, oder wenn die Geschwindigkeit der NO-Abnahme einen fixierten Wert überschreitet, wird die Pumpe 85 außer Betrieb gesetzt. Anstelle eines Ein- oder Ausschaltens der Pumpe 85 kann natürlich auch eine regeltechnisch verbesserte Zu- oder Abnahme des Flusses an stark salpetersäurehaltiger Schwefelsäure herbeigeführt werden. Die Totzeiten im Regelsystem betragen nur einige Minuten. Trotzdem empfiehlt es sich, entsprechende regeltechnische Maßnahmen zu treffen, um ein Hin- und Herpendeln der Konzentrationen zu vermeiden. Derartige regeltechnische Maßnahmen sind aber wohlbekannt.

In der Anlage nach Fig. 1 befindet sich das Analysengerät 285 am Austritt der Füllkörperschicht des Absorptionsturmes 6. Es ist auch möglich, den Stickoxidgehalt am Eintritt der Gase in die Füllkörperschicht 5 des Absorptionsturmes oder zwischen den Füllkörperschichten 5 und 6 der Absorptionzone zu messen. An diesen Stellen ist der Stickoxidgehalt selbstverständlich entsprechend höher als am Austritt der Absorptionszone. Jedoch kann auch eine Messung innerhalb der Absorptionszone als Regelgröße herangezogen werden. Es ergibt sich dann eine Verkürzung der Totzeit. Es ist auch möglich, und in besonderen Fällen zweckmäßig, eine NO-Messung gleichzeitig an verschiedenen Stellen der Stickoxid-Absorptionszone durchzuführen.

Es wurde weiter gefunden, daß es von Vorteil ist, den erfindungsgemäßen Zusatz von flüssigen oder gasförmigen Stoffen, welche an Sauerstoff gebundenen Stickstoff enthalten, möglichst weit vorne im System durchzuführen. Durch diese Maßnahme gelingt es mit relativ kleinen Mengen zugesetzter stickstoffhaltiger Substanzen einen großen Einfluss auf den NO-Gehalt der Abgase der Anlage auszuüben. Die Erfindung ermöglicht also, ein Stickoxid-Schwefelsäure-System zu automatisieren.

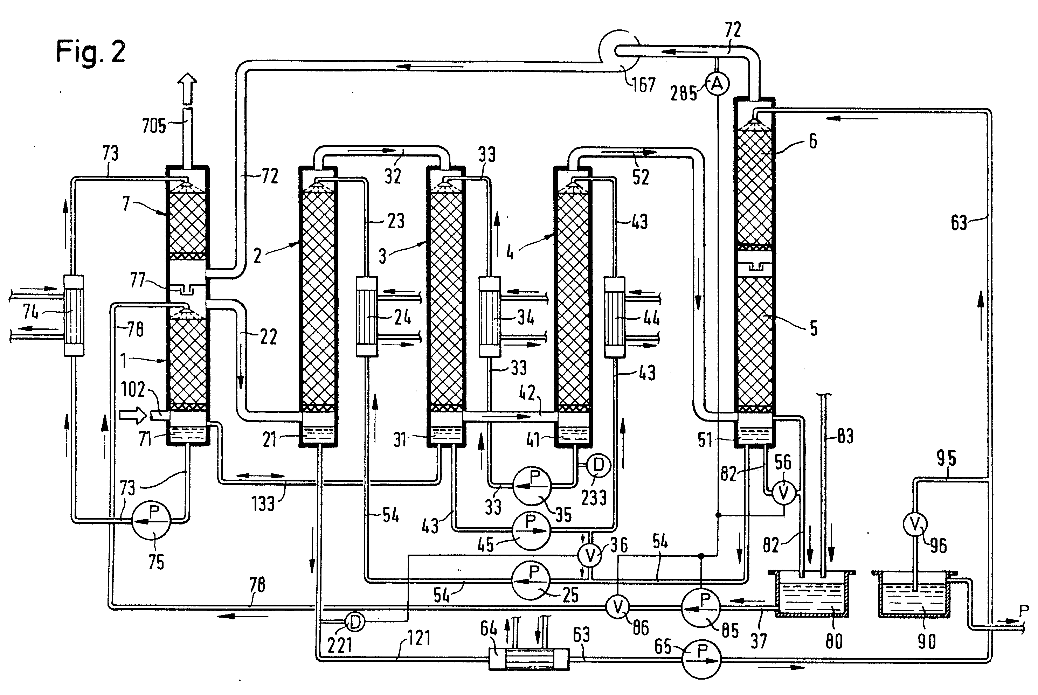

Diese Maßnahme wird in der in Fig. 2 gezeigten Ausführungsform der erfindungsgemäßen Anlage verwirklicht. In der Anlage nach Fig. 2 werden in an sich aus der DE-A-26 09 505 bekannter Weise feuchte SO$_2$-haltige Gase in einem der Denitrierzone vorgeschalteten Vorbehandlungsturm 1 mit Dünnsäure in Kontakt gebracht, wobei den Gasen ein Teil ihres Wasserdampfgehaltes entzogen wird. In der in Fig. 2 dargestellten Anlage übernimmt die Füllkörperschicht 1 diese Funktion. Die aus der Füllkörperschicht des Turmes 1 in den Sumpf 71 dieses Turmes abfließende Dünnsäure wird nun von der Pumpe 75 über die Leitung 73 durch den die Säure erwärmenden Wärmeaustauscher 74 und weiter durch die Leitung 73 in das obere Ende des Turmes 7, dessen Füllkörperschicht eine Säureentwässerungszone darstellt, gefördert.

Im Wärmeaustauscher 74 kann die Säure zusätzlich erwärmt werden, damit die Wasserabgabe der Säure in der Füllkörperschicht des Turmes 7 verstärkt wird. Der in Fig. 2 gezeigte Turm 1 der Vorbehandlungszone stellt erfindungsgemäß einen Vorbereich der SO$_2$-Verarbeitungszone dar.

Der vom Dünnsäurekreislauf des Hauptbereichs der SO$_2$-Verarbeitungszone getrennte Dünnsäurekreislauf für die Vorbehandlungszone über die Leitung 73 wird nun dadurch geschlossen, daß die Dünnsäure, die am obern Ende des Turmes 7 auf dessen Füllkörperschicht gerieselt wird, durch die letztere Schicht hindurch und durch den am unteren Ende des Turmes 7 befindlichen Gas-Flüssigkeitsverschluß 77 in die im darunter befindlichen Turm 1 befindliche Füllkörperschicht wieder einfließt.

Die von dieser Säure bei ihrem Kreislauf in der Füllkörperschicht des Turmes 1 aufgenommene Wassermenge wird so direkt an das Ende des Systems, d.h. in die Füllkörperschicht des Turmes 7 geführt und dort an das über Leitung 72 zugeführte Abgas des Systems abgegeben.

Beim Durchlaufen der Vorbehandlungszone im Turm 1 hat sich die Dünnsäure bereits erwärmt; durch die zusätzliche Erwärmung im Wärmeaustauscher 74 wird wie gesagt die Abgabe von Wasser in der Füllkörperschicht des Turmes 7 verstärkt. Das verdunstete Wasser verläßt als Wasserdampf zusammen mit den SO$_2$-freien Abgasen das System über die Leitung 705.

Durch diese Entwässerungsmaßnahme, durch die der Gasstrom in der Vorbehandlungszone getrocknet wird, wird weniger oder kein Wasserdampf im Gasstrom weitertransportiert und hierdurch ermöglicht, in der Füllkörperschicht des Denitrierturmes 2 sowie in den Füllkörperschichten 5 und 6 der Stickoxid-Absorptionszone stets eine genügende Säurekonzentration aufrechtzuerhalten (z.B. 75 Gew.-% H$_2$SO$_4$).

Durch Regelung der Heizmittelzufuhr zum Wärmeaustauscher 74 kann die Menge des abgegebenen Wassers gesteuert werden, wodurch eine gewünschte Konzentration der Säure im Kreislauf über die Füllkörperschichten der Türme 7 und 1 eingestellt werden kann. Wie bereits vorangehend erläutert, gelangt die abfließende Säure aus der Füllkörperschicht des Turmes 7 über den Gasverschluß 77 direkt auf die Füllkörperschicht des Turmes 1.

Erfindungsgemäß wird nun aus dem Behälter 80 über die Pumpe 85 durch die Leitung 37 zum Ventil 86 und weiter über die Leitung 78 zum oberen Ende der Füllkörperschicht des Turmes 1 Salpetersäure oder nitrosehaltige oder nitrosesalpetersäurehaltige Schwefelsäure gefördert und in die Füllkörperschicht des Turmes 1 eingesprüht, wenn das NO-Analysengerät 285 das Ventil 86 aufsteuert und die Pumpe 85 in Tätigkeit setzt. Hierdurch werden die bereits beschriebenen Vorteile des erfindungsgemäßen Verfahrens auf vollautomatische Weise verwirklicht. Diese bevorzugte Ausführungsform der Erfindung, wie sie in der Anlage nach Fig. 2 dargestellt ist, benutzt also den mit Dünnsäure berieselten Turm 1, welcher gasseitig vor die Denitrierzone geschaltet ist, zum Regeln des gesamten Systems. Dieser mit Füllkörperschicht versehene Turm 1 oder ein entsprechender gas-Flüssigkeits-Reaktionsapparat anderen Typs, welcher mit Dünnsäure berieselt wird und sich gasseitig am Anfang des Systems befindet, wird also mit der Gesamtmenge der flüssigen oder gasförmigen Stoffe, welche an Sauerstoff gebundenen Stickstoff enthalten, beschickt. Die Füllkörperschicht des Turmes 7 ist an ihrem unteren Ende über die Leitung 72 mit dem Ventilator 167 verbunden und erhält aus der Füllkörperschicht des Absorptionsturmes 6 trockene Abgase aus der Absorptionszone. Diese Abgase entziehen der Säure in der Füllkörperschicht des Turmes 7 Wasser und gelangen zusammen mit dem Wasserdampf über die Leitung 705 in die Atmosphäre.

Bisher war es üblich, zur Regelung des NO : $NO_2$-Verhältnisses im Abgas der Anlage bzw. innerhalb der Absorptionszone der Stickoxid-Schwefelsäure-Anlage die Konzentration der Säuren in bestimmten Kreisläufen zu ändern. Dies geschah durch Zufügen von Wasser oder durch Zugabe von verdünnter Säure zu konzentrierterer Säure. Im Gegensatz hierzu kann gemäß der Erfindung auf Aenderungen der Säurekonzentrationen zum Zwecke des Regelung des Systems verzichtet werden. Es genügt, die Dichte der Säuren am Austritt der Denitrierzone und im Kreislauf der $SO_2$-Verarbeitungszone konstant zu halten. Dieses Konstanthalten ist durch bekannte automatische Dichte-Regelgeräte möglich. Wie aus der Fig. 2 ersichtlich ist, befindet sich an der Ablaufleitung 121 aus dem Sumpf 21 das Dichte-Meßgerät 221. Dieses Meßgerät steuert das Ventil 36 auf, wodurch über die Pumpe 25 und die Leitung 23 etwas Dünnsäure in die Füllkörperschicht des Denitrierturms 2 gelangt. das Dichte-Meßgerät steuert den Dünnsäurezusatz in solcher Weise, daß am Austritt der Denitrierzone, d.h. am Austritt der Füllkörperschicht des Denitrierturmes 2 eine konstante Säurekonzentration gehalten wird.

Eine Ausgleichsleitung 133 verbindet die Sümpfe 71 und 31 und sorgt so für einen Ausgleich des Säureniveaus in beiden Sümpfen.

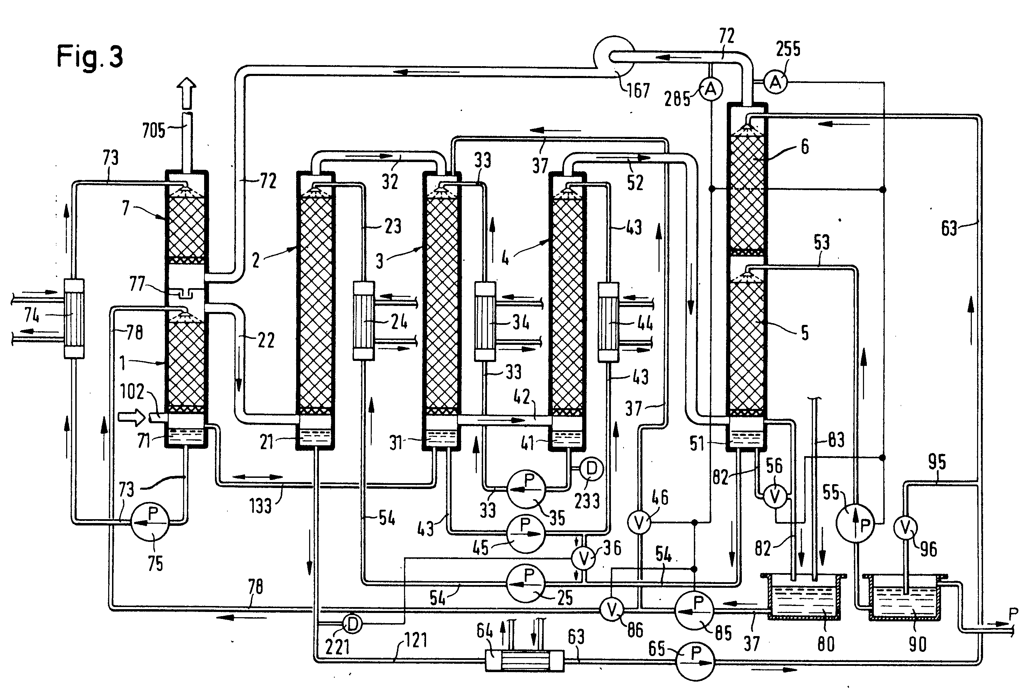

In der in Fig. 3 gezeigten weiteren Ausführungsform einer erfindungsgemäßen Anlage wird nun nicht die Gesamtmenge an Stickstoff-Sauerstoff-Verbindung oder an diese enthaltender Substanz in den Vorbereich der $SO_2$-Verarbeitungszone, also den Vorbehandlungsturm 1 geleitet, sondern nur ein Teil der genannten Verbindung bzw. Substanz, während der übrige Teil der letzteren wie in der Anlage nach Fig. 1 in das obere Ende des Turmes 3, also in den Hauptbereich der $SO_2$-Verarbeitungszone eingeleitet wird. Dabei kann das Verhältnis der Teilmengen, welche einerseits in den Vorbereich und andererseits in den Hauptbereich der $SO_2$-Verarbeitungszone gelangen, durch entsprechende Betätigung der Ventile 46 und 86 gesteuert werden.

Die vorteilhafte Beschleunigung der bei der $SO_2$-Verarbeitung auftretenden Reaktionen ist umso größer, je größer die Kontaktfläche zwischen Gas und Flüssigkeit in den Reaktionsapparaten der $SO_2$-Verarbeitungszone ist.

Durch gleichzeitiges Einleiten von Stickstoff-Sauerstoff-Verbindung in den Vorbereich und in den Hauptbereich der $SO_2$-Verarbeitungszone, also die Füllkörperschichten der Türme 1 und 3 wird nun eine viel größere Oberfläche entsprechend der Summe der Füllkörpervolumen der Türme 1 und 3 berieselt und eine entsprechend höhere Beschleunigung des ganzen Verfahrens der $SO_2$-Verarbeitung erzielt.

In der in Fig. 3 gezeigten Anlage wird in weiterer Ausgestaltung der Erfindung wie bereits erwähnt, neben dem NO-Gehalt in einem Analysengerät 255 auch der $NO_2$-Gehalt der Gase innerhalb oder nach der Absorptionszone gemessen. Diese Meßeinrichtung ist mit einer Regelvorrichtung bekannter Art (nicht dargestellt) gekoppelt, welche der vorangehend beschriebenen Regelung übergeordnet ist, die auf der Messung des NO-Gehaltes aufbaut. Sobald der $NO_2$-Gehalt einen festgesetzten Wert überschreitet, wird der Zusatz von Stoffen, die an Sauerstoff gebundenen Stickstoff enthalten, unterbrochen oder vermindert. Darüberhinaus wird bei einem zu hohen $NO_2$-Gehalt oder einem zu raschen Anstieg der $NO_2$-Konzentration nitrosehaltige Schwefelsäure aus der Absorptionszone unter Aufsteuern des Ventils 56 über das normale Maß hinaus entnommen und eine entsprechende Menge nitrosefreie oder nitrosearme Säure in die Absorptionszone geleitet. Das Analysengerät 255 mißt kontinuierlich die $NO_2$-Konzentration der Gase am Austritt der Füllkörperschicht 6. Sobald der $NO_2$-Gehalt über einen festgesetzten Wert ansteigt, oder bei zu raschem Anstieg der $NO_2$-Konzentration wird die Pumpe 85 stillgelegt. Dadurch wird der Zusatz von stark salpetersäurehaltiger Schwefelsäure aus dem Behälter 80 in die Füllkörperschicht des Turmes 3 unterbrochen. Vom Analysengerät 255 wird außerdem die Pumpe 55 gesteuert. Bei einem zu starken Anstieg des $NO_2$-Gehaltes am Austritt der Füllkörperschicht 6 wird diese Pumpe in Betrieb gesetzt und außerdem das Ventil 56 geöffnet, worauf nitrosehaltige Säure in den Behälter 80 fließt und aus dem Behälter 90 nitrosefreie Säure über die Leitung 53 auf die Füllkörperschicht 5 des Absorptionsturmes geleitet wird. Die nitrosefreie Absorptionssäure spült die nitrosehaltige Säure aus der Füllkörperschicht 5 in den Sumpf 51 und über die Leitung 82 in den Behälter 80.

Wenn die Zufuhr von an Sauerstoff gebundenem Stickstoff nicht in Form von Salpetersäure, sondern in Form von gasförmigen Stickoxiden erfolgt, ist es vorteilhaft, die gasförmigen Stickoxide nicht direkt in die Füllkörperschichten der Türme 3 und 4 der $SO_2$-Verarbeitungszone einzuleiten. Vielmehr wird eine raschere und kräftigere Wirkung erzielt, wenn die Stickoxide zuerst in Schwefelsäure aufgelöst und hierdurch erhaltene stickstoffhaltige Schwefelsäure in die $SO_2$-Verarbeitungszone eingeleitet wird.

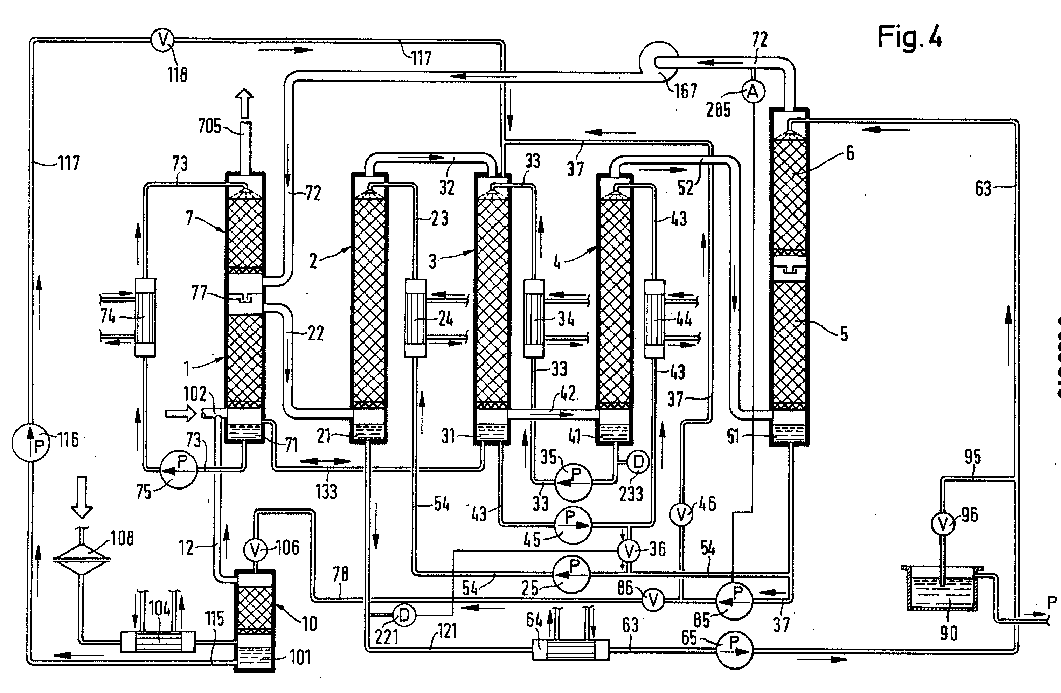

In der Ausführungsform einer erfindungsgemäßen Anlage nach Fig. 4 ist mit 108 eine Vorrichtung zur katalytischen Oxidation von Ammoniak bezeichnet. Die gebildeten Stickoxide werden in einem Wärmeaustauscher 104 gekühlt und durchströmen anschließend eine Kolonne 10 von unten nach oben. Jener Teil der Stickoxide welcher in der Kolonne 10 nicht absorbiert wird, gelangt über eine Leitung 12 in die Leitung 102 und damit in den Hauptgasstrom der Anlage. Aus der Leitung 78 kann über das Ventil 106 Säure in die Kolonne 10 geleitet werden, in der sie mit Stickoxiden gesättigt wird. Diese Säure gelangt nun über den Sumpf 101 und die Leitung 115 zur Pumpe 116 und über Leitung 117 und das Ventil 118 in die Füllkörperschicht des Turmes 3.

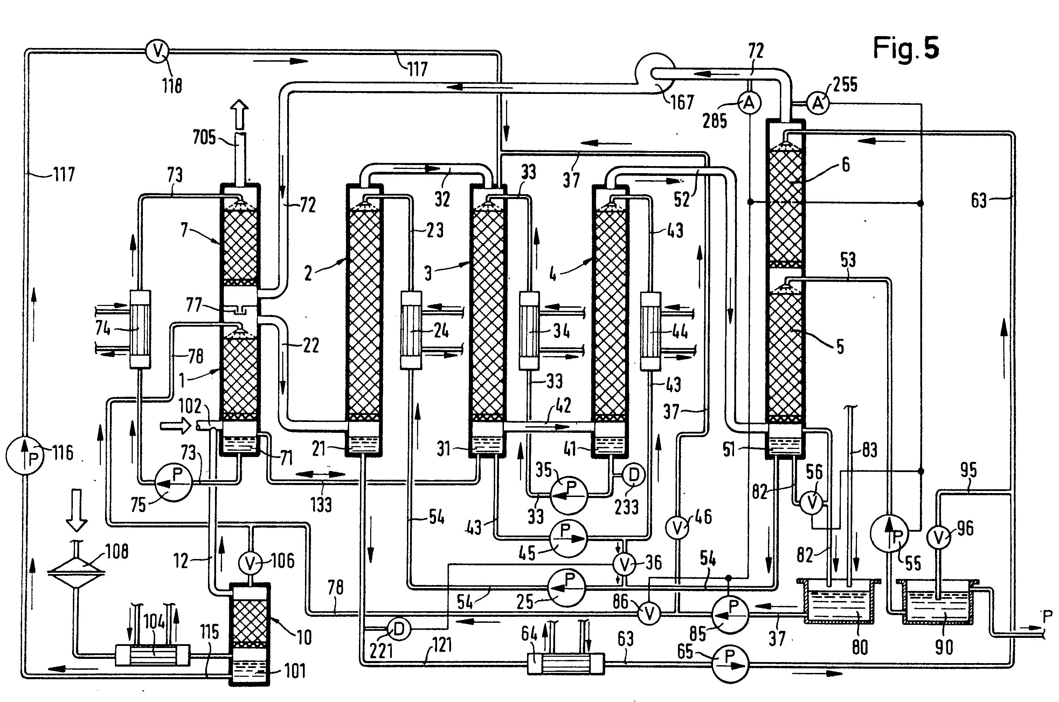

Schließlich ist in Fig. 5 eine Gesamtanlage gezeigt, welche sämtliche Merkmale der Ausführungsformen der Anlagen nach Fig. 1 bis 4 vereint und gestattet, je nach Art und $SO_2$-Gehalt der zu verarbeitenden Gase und je nach dem, ob zeitweilig mehr Ammoniak oder mehr Salpetersäure verbraucht werden soll, in jeder beliebigen der in den vorangehenden Figuren gezeigten Teilanlagen die Behandlung der $SO_2$-haltigen Abgase nach dem Erfindungsgemäßen Verfahren in jeweils wirtschaftlich optimaler Weise durchzuführen.

Das folgende Ausführungsbeispiel illustriert die Durchführung des erfindungsgemäßen Verfahrens in der in Figuren 3 bzw. 5 gezeigten Anlage.

Beispiel

Ein $SO_2$-haltiger Gasstrom enthält pro $Nm^3$ (1 Normalkubikmeter = $1\ m^3$ bei 0 °C und 1.013 Bar folgende Molmengen :

   $SO_2$    0,5-0,9 Mol

   $H_2O$    2,8-3,1 Mol
   $O_2$    4-6 Mol
   $CO_2$    1,2-1,6 Mol
   NO    0,01-0,02 Mol

Der Rest besteht aus Stickstoff.

Ein regelbarer Volumenstrom dieses Gases wird in die Füllkörperschicht des Turmes 1 einer Anlage gemäß Fig. 3 eingeleitet. Das Volumen der Füllkörperschichten der Türme 1 und 7 beträgt je $1\ m^3$. Die Schichten der Türme 2 bis 6 enthalten je $2,6\ m^3$ Füllkörper. Die Summe aller Füllvolumina beträgt demnach $15\ m^3$. Als Füllmaterial werden Polyäthylenkörper gemäß DE-A-24 16 955 verwendet. Die Füllung hat eine Oberfläche von ca. $300\ m^2/m^3$. Die Säureumwälzung in den Füllkörperschichten der Türme 1 und 7 erfolgt wie in Fig. 3 dargestellt und beträgt 2 liter/$Nm^3$ Gas. Die Schicht des Turmes 2 wird in der in Fig. 3 dargestellten Art mit 1 liter/$Nm^3$ Gas berieselt. Die Schichten der Türme 3 und 4 haben eine Berieselung von je 3 liter/$Nm^3$ Gas. Die Berieselung der Schicht 5 des Absorptionsturmes wird durch eine Pumpe und eine Leitung, welche in Fig. 3 nicht dargestellt sind, verstärkt. Diese nicht dargestellte Pumpe fördert aus dem Sumpf 51 Säure auf die Schicht 5, so daß sich zusammen mit dem in Fig. 3 dargestelltem Säurefluß in der Füllung eine Berieselung von 4 liter/$Nm^3$ Gas ergibt.

Die Säuretemperatur am Austritt der Wärmeaustauscher 74 und 24 beträgt 63 °C. Die Säuretemperatur nach den Warmeaustauschern 34, 44, und 64 liegt zwischen 30 und 40 °C. Bezogen auf eine Temperatur von 15 °C haben die umgepumpten Säuren folgendes Litergewicht :

| Schichten 1 und 7 | 1,5 kg/Liter |
| | (48,1° Bé = 59,7 % $H_2SO_4$) |
| Schichten 2,5 und 6 | 1,67 kg/Liter |
| | (57,9° Bé = 74,66 % $H_2SO_4$) |
| Schichten 3 und 4 | 1,56 kg/Liter |
| | (51,8° Bé = 65,2 % $H_2SO_4$) |

Die in den Schichten 5 und 6 des Absorptionsturmes absorbierten Stickoxide werden mit der Säure über den Sumpf 51 durch die Pumpe 25 über die Leitung 23 auf die Schicht des Turmes 2 geleitet, in welcher diese Stickoxide durch die reaktion mit dem $SO_2$ als NO in den Gasstrom gelangen, welcher die Schicht des Turmes 2 durch die Leitung 32 verläßt. Die $SO_2$-Verarbeitung in den Schichten der Türme 3 und 4 ist umso besser, je mehr Stickoxide im Gasstrom enthalten sind.

Ueber die Leitung 23 werden pro $Nm^3$ Gas ein Liter nitrosehaltige Säure in die Schicht des Turmes 2 geleitet. Je höher der Nitrosegehalt der Säure ist, umsomehr $SO_2$-haltiges Gas kann im System verarbeitet werden. Bei zu hohem Nitrosegehalt der Säure steigt jedoch der Stickoxid-Gehalt der Abgase des Systems an. Zur Regelung des Nitrosegehaltes der Säure im Sumpf 51 wird aus dem Behälter 80 Salpetersäure, die dem Behälter über Leitung 83 zugeführt wurde, mittels der Pumpe 85 über das Ventil 46 durch die Leitung 37 auf die Schicht des Turmes 3 geleitet.

Die in der Schicht dieses Turmes 3 und des nachfolgenden Turmes 4 freigesetzten Stickoxide gelangen durch die Gasleitung 42, 52 in die Schicht 5 des Absorptionsturmes und werden dort von der Schwefelsäure aufgenommen und rieseln in den Sumpf 51.

Bei einer Gasmenge von 400 $Nm^3$/h wird bei einem Nitrosegehalt der Säure im Sumpf 51 von 2 Gew.-%, berechnet als $HNO_3$, ein Abgas aus dem Gesamtsystem in Leitung 705 erzielt, welches 50 bis 100 ppm NO und 200 bis 300 ppm $NO_2$ enthält. Wenn anstelle von 400 $Nm^3$/h eine Gasmenge von 500 $Nm^3$/h in das System geleitet wird, oder wenn bei gleichbleibender Gasmenge der $SO_2$-Gehalt im Eintrittsgas ansteigt, kann das System das $SO_2$ nicht mehr vollständig verarbeiten und es gelangt $SO_2$ in die Absorptionszone, wodurch der NO-Gehalt der Abgase des Systems ansteigt.

Um die erhöhte $SO_2$-Menge ohne große Stickoxidverluste verarbeiten zu können, muß — sofern die erfindungsgemäßen Maßnahmen nicht angewendet werden — der Nitrosegehalt der Säure, welche in die Schicht des Turmes 2 geleitet wird, gesteigert und/oder die Menge der Säure, welche in die Schicht des Turmes 2 geleitet wird, erhöht werden. Bei der normalen Berieselung der Schicht des Turmes 2 von 1 liter/$Nm^3$ Gas muß der Nitrosegehalt im Sumpf 51 auf ca. 3 Gew.-% $HNO_3$ angehoben werden, wenn 500 $Nm^3$/h Gas verarbeitet werden müssen.

Beim an sich möglichen Zusetzen von Salpetersäure in die Schicht des Denitrierturmes 2 muß schrittweise vorgegangen werden, weil es viele Minuten Zeit benötigt, bis eine Änderung des Stickoxidgehaltes der Gase stromab der Absorptionszone eintritt. Ein zu hoher Salpetersäurezusatz oder ein Rückgang des $SO_2$-Gehaltes der Eintrittsgase führt zu einem $NO_2$-Anstieg und damit zu einer Gelbfärbung der Abgase des Systems. Zur Beseitigung dieser Gelbfärbung müßte dann die Konzentration der Säure in der Denitrierungszone und der Absorptionszone angehoben werden. Hierzu würde der Zusatz von Wasser oder Dünnsäure vermindert oder abgestellt. Es würde aber mehrere Stunden dauern, bevor die $NO_2$-Konzentration im Abgas wieder unter 400 ppm absinkt.

Wird hingegen im Sinne der Erfindung verfahren, so kann sowohl ein Anstieg als auch ein Abfall der $SO_2$-Konzentration der Eintrittsgase und auch eine Aenderung des Volumenstromes der $SO_2$-haltigen Gase kompensiert werden, ohne daß ein größerer Stickoxidverlust über die Abgase eintritt. Ein Ansteigen des $SO_2$-Gehaltes im zu behandelnden Gas bewirkt eine Erhöhung des im Analysengerät 285 kontinuierlich gemessenen NO-Gehaltes der Gase nach der Absorptionszone über den Normalwert von 100 ppm hinaus auf z.B. 150 ppm. Eine automatische Regelvorrichtung setzt dann die Pumpe 85 in Betrieb, wodurch eine Schwefelsäure, die 20 Gew.-% Salpetersäure enthält, aus dem Behälter 80 durch die Leitungen 78 bzw. 37 in die Füllkörperschichten der Türme 1 und 3 geleitet wird. Die Ventile 86 und 46 sind so reguliert, daß 0,4 Liter pro Minute zur Schicht des Turmes 1 und 0,6 Liter pro Minute zur Schicht des Turmes 3 fließt. Bereits nach zwei Minuten fällt der NO-Gehalt am Austritt der Absorptionszone unter 100 ppm ab und die Pumpe 85 wird außer Betrieb gesetzt. Die in die Dünnsäure der beiden Kreisläufe durch die Türme 1 bzw. 3 zugesetzte Salpetersäure verbraucht sich nach ca. 15 Minuten und wird in Form gasförmiger Stickoxide abgegeben. Diese Stickoxide werden in der Absorptionszone von der Säure aufgenommen, wodurch der Nitrosegehalt der Säure im Sumpf 51 ansteigt.

Jedoch reicht der Nitrose-Anstieg noch nicht aus, um in der Schicht des Denitrierturmes eine der erhöhten $SO_2$-Menge im Gasstrom angepaßte Reaktion herbeizuführen. Nach ca. 12 Minuten steigt der NO-Gehalt der Abgase wieder über 150 ppm an, während der $NO_2$-Gehalt von einem Maximum von 250 ppm unter 150 ppm abfällt. Das Analysengerät 285 shaltet erneut die Pumpe 85 ein und wiederum fällt bereits nach zwei Minuten der NO-Gehalt der Gase nach der Absorptionszone unter 100 ppm, wodurch die Pumpe 85 ausgeschaltet wird.

Dieser Vorgang des Ein- und Ausschaltens der Pumpe 85 wiederholt sich so lange, bis sich der Nitrosegehalt im Sumpf 51 an die erhöhte $SO_2$-Menge im durch Leitung 102 eintretenden Gasstrom, welche im System verarbeitet werden muß, angepaßt hat. Der Abstand zwischen zwei Schaltperioden wird dabei umso länger, je näher der Nitrosegehalt im Sumpf 51 an den für eine $SO_2$-Aufarbeitung nötigen Wert heranrückt.

Wenn hingegen die Gasmenge, welche im System verarbeitet werden muß, geringer wird, oder die Konzentration an $SO_2$ im zu behandelnden Gas abfällt, dann steigt der $NO_2$-Gehalt der Gase stromab der Absorptionszone an und der NO-Gehalt fällt weit unter 100 ppm ab. Der $NO_2$-Gehalt der Abgase der Absorptionszone wird vom Analysengerät 255 kontinuierlich gemessen. Wenn der $NO_2$-Gehalt pro Minute um mehr als 30 ppm je Minute ansteigt, und/oder wenn der $NO_2$-Gehalt über 200 ppm erreicht, wird durch eine automatische Regelvorrichtung (nicht gezeigt) die Pumpe 85 stillgesetzt, sofern dieselbe zu diesem Zeitpunkt in Betrieb war. Bei einem Anstieg von mehr als 50 ppm pro Minute und/oder einem $NO_2$-Gehalt über 300 ppm pro Minute und/oder einem $NO_2$-Gehalt über 300 ppm öffnet eine automatische Regelvorrichtung das Ventil 56 und schaltet die Pumpe 55 ein. Dadurch fließt nitrosehaltige Schwefelsäure in den Behälter 80, während aus dem Behälter 90 nitrosefreie Schwefelsäure mittels der Pumpe 55 über die Leitung 53 auf die Füllkörperschicht 5 gelangt. Die Menge der zugesetzten und der abgezogenen Säure beträgt 0,3 Liter pro/$Nm^3$ Gas. Nach ca. 3 Minuten fällt der $NO_2$-Gehalt der Gase nach der Absorptionszone unter 200 ppm ab und die automatische Regelvorrichtung schließt das Ventil 56 und setzt die Pumpe 55 außer Betrieb. Durch Zusatz von Salpetersäure durch die Leitung 83 wird im Behälter 80 ein Salpetersäuregehalt von 20 % hergestellt.

In Perioden des Eintritts von Gasen mit hohem $SO_2$-Gehalt in das System wird, wie bereits erläutert, die Säure des Behälters 80 wieder in das System eingeführt.

Entsprechend der Menge des im System verarbeiteten $SO_2$ entsteht Schwefelsäure, welche aus dem Behälter 90 als Produktion über die Ablaßleitung (P) abfließt.

Durch die geschilderten Regelvorrichtungen gelingt es, den $N_xO_y$-Gehalt (Summe des NO- und $NO_2$-Gehaltes) der Abgase des Systems ständig unter 400 ppm zu halten, auch dann, wenn die zu verarbeitende Gasmenge oder die $SO_2$-Konzentration häufigen Schwankungen im Bereich ± 70 % des Tagesmittelwertes unterworfen ist. Das Litergewicht (bzw. die Dichte) der Säurekreisläufe wird dabei wie folgt geregelt :

Das Litergewicht des Kreislaufes über die Füllkörperschichten der Türme 1 und 7 wird durch Regelung der Wärmezufuhr im Wärmeaustauscher 14 bei 1,5 kg/Liter gehalten. Vermehrte Wärmezufuhr verstärkt die Wasserabgabe in der Füllkörperschicht des Turmes 7 und erhöht daher das Litergewicht. Das Litergewicht im Säurekreislauf der Füllkörperschichten der Türme 3 und 4 der $SO_2$-Verarbeitungszone wird durch geregelten Zusatz von Säure aus dem Sumpf 71 bei 1,56 kg/Liter gehalten. Die entsprechenden Leitungen und Ventile sind in Fig. 3 nicht dargestellt. Das Litergewicht am Austritt des Denitrierturmes 2 wird durch geregelten Zusatz von Dünnsäure aus dem Sumpf 31 auf die Füllkörperschicht des Turmes 2 bei 1,67 kg/Liter gehalten.

Analysatoren, wie sie in Anlagen nach der Erfindung Verwendung finden, sind wohlbekannt. Wie werden z.B. von Thermo Electron Corporation, Waltham, Mass., USA hergestellt und als « $NO_x$ chemoluminescent source analyzer for automative emission » oder als « NO-$NO_x$ chemoluminescent analyzer » z.B. « Model 44 » vertrieben.

Eine zur Regelung zu verwendende Schaltung ist z.B. im Artikel « Automatisierung-Regelungstechnik » in Meyers Handbuch über die Technik, Biographisches Institut Mannheim, Allgemeiner Verlag 1971, Seiten 729-736 beschrieben. Wird z.B. in Abb. 1 dieses Artikels ein NO- oder $NO_2$ Analysator der vorbeschriebenen Art an Stelle des Thermoelements eingesetzt, so wird über den elektrischen Meßumformer MU und Regler R das gezeigte Ventil gesteuert. Eine mehr ins einzelne gehende Darstellung des Schaltteils vom elektrischen Meßumformer MU bis zu einem Ventil oder einer Pumpe ist in der linken Hälfte der Abb. 8 desselben Artikels illustriert.

**Ansprüche**

1. Verfahren zum Abtrennen von $SO_2$ aus einem dieses mindestens zeitweilig in zum Ablassen in die Umgebungsluft unzulässig hoher Konzentration enthaltenden Gasstrom unter Gewinnung von Schwefelsäure nach dem Stickoxidverfahren, bei welch letzterem das $SO_2$-haltige Gas zunächst eine Denitrierungszone oder eine als Gasentwässerungszone dienende Vorbehandlungszone und alsdann die Denitrierungszone, hierauf den Hauptbereich der $SO_2$-Verarbeitungszone, bestehend aus mindestens einem Füllkörperturm und anschliessend eine Stickoxid-Absorptionszone durchströmt, wobei es in mindestens einem der beiden Bereiche der $SO_2$-Verarbeitungszone mit durch den betreffenden Bereich dieser Zone im Kreislauf geführter Dünnsäure von Konzentrationen unterhalb 70 Gew.-% (55° Bé) $H_2SO_4$ in Kontakt gebracht wird, während in der Absorptionszone die in der Denitrierungszone freiwerdenden Stickoxide von Schwefelsäure aufgenommen werden und aus der Absorptionszone nitrosehaltige Säure mit einem Gehalt an 70 bis 85 Gew.-% (55 bis 63,5 Bé) $H_2SO_4$ entnommen und in die Denitrierungszone überführt wird, dadurch gekennzeichnet, dass

(a) der Gehalt an NO im Gasstrom in der Absorptionszone oder stromab der Absorptionszone oder gleichzeitig sowohl in der Absorptionszone als auch stromab derselben gemessen wird, und dass

(b) beim Ueberschreiten eines bestimmten NO-Grenzgehalts oder bei Ueberschreiten eines Steilheitsgrenzwertes des Anstiegs je Zeiteinheit des NO-Gehalts im Gasstrom an der oder den NO-Messstellen in den Dünnsäurekreislauf mindestens eines der beiden Bereiche der $SO_2$-Verarbeitungszone eine Stickstoff-Sauerstoff-Verbindung (wie definiert) in einer bestimmten Menge eindosiert wird, die einerseits ausreicht, um die Ueberschreitung des genannten NO-Grenzgehaltes oder Steilheitsgrenzwertes zu beseitigen, aber andererseits nahe an den genannten Grenzwerten verbleibt, wobei eine Aenderung der Säurekonzentration in der Absorptionszone praktisch vermieden wird, und wobei für den Fall, dass eine gasförmige Stickstoff-Sauerstoff-Verbindung verwendet wird, diese zuerst in Dünnsäure gelöst und letztere dann, wie oben beschrieben, in den Dünnsäurekreislauf eindosiert wird.

2. Verfahren nach Anspruch 1, dadurch gekennzeichnet, daß die Menge an dosierter Stickstoff-Sauerstoff-Verbindung erhöht wird, in dem Maße wie der NO-Gehalt des Gasstromes in oder nach der Absorptionszone ansteigt.

3. Verfahren nach Anspruch 1, dadurch gekennzeichnet, daß die Zuflußrate an Stickstoff-Sauerstoff-Verbindung konstant gehalten wird, solange der NO-Gehalt des Gasstroms in oder stromab der Absorptionszone den Grenzgehalt an NO übersteigt.

4. Verfahren nach Anspruch 1, dadurch gekennzeichnet, daß die Menge an zudosierter Stickstoff-Sauerstoff-Verbindung erhöht wird, in dem Maße wie ein Steilheitsgrenzwert des Anstiegs je Zeiteinheit des NO-Gehalts im Gasstrom in oder stromab der Absorptionszone überschritten wird.

5. Verfahren nach Anspruch 1, dadurch gekennzeichnet, daß die Menge an zudosierter Stickstoff-Sauerstoff-Verbindung konstant gehalten wird, solange ein Steilheitsgrenzwert des Anstiegs je Zeiteinheit des NO-Gehalts im Gasstrom in oder stromab der Absorptionszone überschritten wird.

6. Verfahren nach einem der Ansprüche 1 bis 5, dadurch gekennzeichnet, daß die Stickstoff-Sauerstoff-Verbindung aus Salpetersäure oder aus durch Ammoniakverbrennung erzeugten Stickoxiden besteht.

7. Verfahren nach einem der Ansprüche 1 bis 6, dadurch gekennzeichnet, daß die genannte Stickstoff-Sauerstoff-Verbindung durch Absorption von Stickoxiden in Schwefelsäure gebildet wird.

8. Verfahren nach einem der Ansprüche 2 oder 3, dadurch gekennzeichnet, daß die Zudosierung der Stickstoff-Sauerstoff-Verbindung unterbrochen wird, wenn der NO-Gehalt des Gasstroms stromab der Absorptionszone unter einen festgelegten Wert absinkt, der tiefer liegt als der vorgenannte Grenzgehalt an NO.

9. Verfahren nach einem der Ansprüche 4 oder 5, dadurch gekennzeichnet, daß die Zudosierung der Stickstoff-Sauerstoff-Verbindung vermindert wird, wenn ein vorbestimmter Steilheitsgrenzwert des Abfalls je Zeiteinheit des NO-Gehalts im Gasstrom stromab der Absorptionszone unterschritten wird, wobei der letztgenannte Steilheitsgrenzwert etwa dem Steilheitsgrenzwert nach (b) entspricht.

10. Verfahren nach einem der Ansprüche 1 bis 9, dadurch gekennzeichnet, daß

(a) zusätzlich die $NO_2$-Konzentration des Gasstroms stromab der Absorptionszone gemessen wird ;

(b) bei Ueberschreiten eines bestimmten $NO_2$-Gehalts oder bei Ueberschreiten einer Steilheitsgrenze des Anstiegs des $NO_2$-Gehalts im Gasstrom an der $NO_2$-Meßstelle die Eindosierung der Stickstoff-Sauerstoff-Verbindung in den Dünnsäurekreislauf der $SO_2$-Verarbeitungszone unterbrochen wird.

11. Verfahren nach Anspruch 10, dadurch gekennzeichnet, daß

(c) bei Ueberschreiten eines zweiten, höheren Grenzwertes des $NO_2$-Gehalts im Gasstrom stromab der Absorptionszone oder bis Ueberschreiten einer zweiten, höheren Steilheitsgrenze des Anstieges des $NO_2$-Gehalts im Gasstrom stromab der Absorptionszone die Menge der aus der letzteren Zone ausfließende nitrosehaltigen Säure gesteigert und entsprechend aus der Denitrierzone stammende nitrosearme oder nitrosefreie Säure in die Absorptionszone eingeführt wird.

12. Verfahren nach einem der Ansprüche 1 bis 11, dadurch gekennzeichnet, daß mindestens ein Teil der in die $SO_2$-Verarbeitungszone eingeführten Stickstoff-Sauerstoff-Verbindung aus aus der Absorptionszone entnommener nitrosehaltiger Schwefelsäure besteht.

13. Verfahren nach Anspruch 12, dadurch gekennzeichnet, daß der Gehalt der aus der Absorptionszone entnommenen und in die $SO_2$-Ver-

arbeitungszone einzudosierenden nitrosehaltigen Schwefelsäure an Stickstoff-Sauerstoff-Verbindung durch Zugabe von Salpetersäure erhöht wird.

14. Verfahren nach einem der Ansprüche 1 bis 12, dadurch gekennzeichnet, daß vor die Denitrierzone eine von einem separaten Dünnsäurekreislauf durchströmte Vorbehandlungszone vorgeschaltet ist, durch welche der Gasstrom vor Einleitung in die Denitrierungszone hindurch geleitet wird und daß ein Teil oder die Gesamtmenge an Stickstoff-Sauerstoff-Verbindung in diese Vorbehandlungszone eingeleitet wird.

15. Verfahren nach Anspruch 14, dadurch gekennzeichnet, daß der in die Vorbehandlungszone eingeleitete Anteil der Substanzgesamtmenge aus einer aus der Absorptionszone in die $SO_2$-Verarbeitungszone fließenden nitrosehaltigen Schwefelsäure abgezweigt wird.

16. Verfahren nach einem der Ansprüche 14 und 15, dadurch gekennzeichnet, daß mindestens ein Teil der in die Vorbehandlungszone einzuleitenden Menge an Stickstoff-Sauerstoff-Verbindung aus durch Ammoniakverbrennung erzeugten gasförmigen Stickoxiden besteht, und daß diese Stickoxide in den Gasstrom vor dessen Eintritt in die Vorbehandlungszone eingeleitet werden.

17. Verfahren nach Anspruch 15, dadurch gekennzeichnet, daß der Gehalt der aus der Absorptionszone entnommenen und teils in den Hauptbereich der $SO_2$-Verarbeitungszone und teils in die Vorbehandlungszone einzuleitenden nitrosehaltigen Schwefelsäure an Stickstoff-Sauerstoff-Verbindungen durch Zugabe von Salpetersäure erhöht wird.

18. Verfahren nach einem der Ansprüche 1 bis 17, dadurch gekennzeichnet, daß die Dichte der aus der Denitrierungszone austretenden Säure durch Zusatz von Dünnsäure oder Wasser konstant gehalten wird.

19. Verfahren nach einem der Ansprüche 1 bis 18, dadurch gekennzeichnet, daß die Dichte der den Hauptbereich der $SO_2$-Verarbeitungszone im Kreislauf durchströmenden Dünnsäure durch Zusatz von Säure aus der Vorbehandlungszone oder von Wasser konstant gehalten wird.

20. Anlage zum Abtrennen von $SO_2$ aus einem dieses mindestens zeitweilig in zum Ablassen in die Umgebungsluft unzulässig hoher Konzentration enthaltenden Gasstrom unter Gewinnung von Schwefelsäure nach dem Stickoxidverfahren, welche Anlage mindestens nacheinander umfaßt :

(a) eine Denitrierungszone (2)

(b) eine $SO_2$-Verarbeitungszone (3, 4) und

(c) eine Stickoxid-Absorptionszone (5, 6) mit je Zone mindestens einem Gas-Flüssigkeits-Reaktionsapparat, der mit einem für die Aufnahme von aus dem unteren Ende des betroffenen Apparates austretender Flüssigkeit dienenden Sumpf (21, 31, 41, 51) versehen ist,

(d) eine Leitung für den Gasstrom (102, 22, 32, 42, 52, 72, 705), welche nacheinander am unteren Ende der Denitrierungszone (2) in diese eintritt und vom oberen Ende der letzteren zur $SO_2$-Verarbeitungszone (3, 4) und von der letzteren zur Stickoxid-Absorptionszone (5, 6) und schließlich vom oberen Ende der letzteren Zone ins Freie führt,

(e) eine Kreislaufleitung (33, 43) für Dünnsäure durch die $SO_2$-Verarbeitungszone, und schließlich

(f) eine Kreislaufleitung für Säure (54, 23) vom in Gasstromflußrichtung ersten Sumpf (51) der Stickoxid-Absorptionszone (5, 6) zum oberen Ende der Denitrierungszone (2) und vom Sumpf (21) der letzteren zurück (121, 63) zum oberen Ende eines Reaktionsapparats (6) der Stickoxid-Absorptionszone (5, 6), dadurch gekennzeichnet, daß

(g) an die Dünnsäure-Kreislaufleitung (33, 43) durch die $SO_2$-Verarbeitungszone eine Zuleitung (37, 117) für Stickstoff-Sauerstoff-Verbindung in flüssiger (37) oder gasförmiger (117) Phase angeschlossen ist, daß

(h) eine Meßeinrichtung (285) zum Messen des Gehalts an NO im Gasstrom, die an die Absorptionszone (5, 6) oder an die Leitung (d) für den Gasstrom stromab der Absorptionszone oder gleichzeitig an die Absorptionszone (5, 6) und an die Leitung (72) stromab der Absorptionszone (5, 6) angeschlossen ist, und daß

(i) eine Regeleinrichtung (85), welche die Zugabe von Stickstoff-Sauerstoff-Verbindung durch die Zuleitung (37) in Abhängigkeit von den durch die Meßeinrichtung (285) ermittelten NO-Gehalten dosiert, vorgesehen sind.

21. Anlage nach Anspruch 20, dadurch gekennzeichnet, daß eine $NO_2$-Meßeinrichtung (255) zum Messen des $NO_2$-Gehalts im Gasstrom, die an die Absorptionszone (5, 6) oder an die Leitung (72) für den Gasstrom stromab der Absorptionszone angeschlossen ist, vorgesehen ist, und daß die Regeleinrichtung

(k) eine übergeordnete Regelvorrichtung umfaßt, welche die Zufuhr von Stickstoff-Sauerstoff-Verbindung über die Zuleitung (37, 117) in Abhängigkeit vom durch die $NO_2$-Einrichtung gemessenen $NO_2$-Gehalt im Gasstrom unterbricht oder vermindert.

22. Anlage nach einem der Ansprüche 20 und 21, dadurch gekennzeichnet, daß die Zuleitung (37, 117) zur Aufnahme der Stickstoff-Sauerstoff-Verbindung in Form von nitrosehaltiger Schwefelsäure an den Sumpf (51) eines Reaktionsapparats (5) der Stickoxid-Absorptionszone (5, 6) angeschlossen ist.

23. Anlage nach Anspruch 22, dadurch gekennzeichnet, daß in der Zuleitung (37) eine Einleitungseinrichtung (83) für Salpetersäure vorgesehen ist.

24. Anlage nach einem der Ansprüche 22 und 23, welche eine der Denitrierzone (2) vorgeschaltete Vorbehandlungszone (1) mit Reaktionsapparat und Sumpf (71) umfaßt, wobei die Leitung (102, 22) für den Gasstrom zuerst in diese Vorbehandlungszone (1) an deren unterem Ende und von dem oberen Ende der letzteren zum unteren Ende der Denitrierzone (2) führt und wobei eine separate, durch die Vorbehandlungszone von oben nach unten führende Kreislaufleitung (73) für Dünnsäure sowie eine Ausgleichsleitung (133) zwischen den Sümpfen der Vorbehandlungszone (71) und der Denitrierzone (21) vorgesehen ist, dadurch gekennzeichnet, daß eine Zweigleitung (78) aus der Zuleitung (37) zum oberen Ende der Vorbehandlungszone (1) vorgesehen ist.

25. Anlage nach einem der Ansprüche 20 oder 21, dadurch gekennzeichnet, daß eine Ammoniakverbrennungsanlage (108) mit einer zur mindestens teilweisen Aufnahme der darin entwickelten Stickoxide in Schwefelsäure dienenden Kolonne (10) vorgesehen ist, und daß eine Ueberführungsleitung (115, 117) den Fuß der Kolonne (10) mit dem oberen Ende eines in Gasstromrichtung ersten Reaktionsapparates (3) der $SO_2$-Verarbeitungszone (3, 4) zwecks Zuführen stickoxidhaltiger Schwefelsäure in die letztere Zone verbindet.

26. Anlage nach Anspruch 25, welche eine der Denitrierzone (2) vorgeschaltete Vorbehandlungszone (1) mit Reaktionsapparat und Sumpf (71), eine separate durch die Vorbehandlungszone (1) von oben nach unten führende Kreislaufleitung (73) für Dünnsäure sowie eine Ausgleichsleitung (133) zwischen den Sümpfen der Vorbehandlungszone (71) und der Denitrierzone (21) umfaßt, wobei die Leitung (102, 22) des Gasstromes zuerst in die Vorbehandlungzone (1) an deren unterem Ende und von dem oberen Ende der letzteren zum unteren Ende der Denitrierzone (2) führt, dadurch gekennzeichnet, daß eine Zuleitung (12) für stickoxidhaltige Gase das obere Ende der Kolonne (10) der Ammoniakverbrennungsanlage mit dem den Gasstrom in das untere Ende der Vorbehandlungszone einführenden Teil (102) der Leitung (102, etc.) verbindet.

27. Anlage nach einem der Ansprüche 25 oder 26, dadurch gekennzeichnet, daß die Zuleitung (37) zwecks Aufnahme der Stickstoff-Sauerstoff-Verbindung in Form von nitrosehaltiger Schwefelsäure an den Sumpf (51) eines Reaktionsapparates (5) der Stickoxid-Absorptionszone (5, 6) angeschlossen ist und daß eine Zweigleitung (78, 106) aus der Zuleitung (37) zum oberen Ende der Kolonne (10) der Ammoniakverbrennungsanlage (108) führt.

28. Anlage nach Anspruch 27, dadurch gekennzeichnet, daß die Zweigleitung (78) aus der Zuleitung (37) mit einem weiteren Unterzweig an das obere Ende der Vorbehandlungszone (1) angeschlossen ist.

## Claims

1. A process for separating $SO_2$ from a current of gas which contains this substance, at least intermittently, in a concentration which is impermissibly high for discharge into the ambient atmosphere, with attendant production of sulfuric acid by the nitrogen oxide process, in which latter

process the $SO_2$-containing gas initially flows through a denitration zone or first through a pretreatment zone forming a first sector of an $SO_2$-processing zone and then through the denitration zone, thereafter through the main zone of the $SO_2$-processing zone, and subsequently through a nitrogen oxide absorption zone, in the course of which flow it is brought into contact in at least one of the two sectors of the $SO_2$-processing zone with dilute acid having a $H_2SO_4$-concentration of less than 70 % by weight (55° Bé) which acid is circulated through the sector concerned of this latter zone, whilst in the absorption zone the nitrogen oxides released in the denitration zone are absorbed by sulfuric acid, and nitrose-containing acid having a $H_2SO_4$-concentration of 70 to 80 % by weight (55° to 63.5 Bé) is drawn off from the absorption zone and fed into the denitration zone, which process further comprises :

(a) measuring the content of NO in the current of gas at a point in the absorption zone or downstream of the absorption zone or simultaneously at points both in the absorption zone and downstream thereof, and

(b) introducing a nitrogen-oxygen compound (as defined) into the dilute acid cycle of at least one of the two sectors of the $SO_2$-processing zone when a specific limit value of the NO-content or of the steepness of an increase per unit of time of the NO-content in the current of gas at the NO-control point or points is exceeded, in an amount which is sufficient, on the one hand, to eliminate the increase in the said NO-content limit value or slope limit value, but, on the other hand, which remains close to the said limit values, thus virtually avoiding a change in the acid concentration in the absorption zone, and, if a gaseous nitrogen-oxygen compound is used, dissolving this compound firstly in dilute acid and then introducing it, as described above, into the dilute acid cycle.

2. The process of claim 1, wherein the added amount of nitrogen-oxygen compound in increased proportionately to the increase in the NO-content of the current of gas in or downstream of the absorption zone.

3. The process of claim 1, wherein the rate of flow of added nitrogen-oxygen compound is kept constant as long as the NO-content of the current of gas in or downstream of the absorption zone exceeds the said limit value of NO.

4. The process of claim 3, wherein the added amount of nitrogen-oxygen compound is increased at the same rate as a limit value of steepness of an increase per unit of time of the NO-content in the current of gas in or downstream of the absorption zone is exceeded.

5. The process of claim 1, wherein the added amount of nitrogen-oxygen compound is kept constant as long as a limit value of the steepness of the increase per unit of time of the NO-content in the current of gas in or downstream of the absorption zone is exceeded.

6. The process of any one of claims 1 to 5, wherein the nitrogen-oxygen compound consists of nitric acid, or of nitrogen oxides which are produced by the oxidation of ammonia.

7. The process of any one of claims 1 to 6, wherein the nitrogen-oxygen compound is formed by the absorption of nitrogen oxides in sulfuric acid.

8. The process of either of claims 2 or 3, wherein the addition of nitrogen-oxygen compound is interrupted when the NO-content of the current of gas downstream of the absorption zone falls below a fixed value which is lower than the limit-content of NO.

9. The process of either of claims 4 or 5, wherein the addition of nitrogen-oxygen compound is reduced when the NO-content in the current of gas downstream of the absorption zone falls below a predetermined limit value of the steepness of the increase in the NO-content per unit of time, the limit value of the steepness corresponding approximately to that defined under (b), supra.

10. The process of any one of claims 1 to 9, wherein (a) additionally the $NO_2$-concentration of the current of gas at a point downstream of the absorption zone is measured ; and (b) the addition of nitrogen-oxygen compound to the dilute acid cycle through the $SO_2$-processing zone is interrupted when a specific limit $NO_2$-content or a limit value of the steepness in the rise of the $NO_2$-content in the current of gas at the $NO_2$-control point is exceeded.

11. The process of claim 10, wherein (c) the amount of nitrose-containing acid flowing from the absorption zone is increased and nitrose-improverished or nitrose-free acid from the denitration zone is correspondingly introduced into the absorption zone whenever a second, higher limit value of the $NO_2$-content in the current of gas downstream of the absorption zone is exceeded or until a second, higher steepness limit in the rise of the $NO_2$-content in the current of gas downstream of the absorption zone is exceeded.

12. The process of any one of claims 1 to 11, wherein at least a portion of the nitrogen-oxygen compound introduced into the $SO_2$-processing zone consists of nitrose-containing sulfuric acid taken from the absorption zone.

13. The process of claim 12, wherein the content of nitrose-containing sulfuric acid taken from the absorption zone and to be introduced into the $SO_2$-processing zone is increased by the addition of nitric acid to said nitrose-containing sulfuric acid.

14. The process of any one of claims 1 to 12, further comprising a pretreatment zone through which a separate cycle of dilute acid flows and through which the current of gas is passed before it enters the denitration zone, which pretreatment zone is arranged upstream of the denitration zone, a portion of the total amount of nitrogen-oxygen compound being introduced into this pretreatment zone.

15. The process of claim 14, wherein the portion of said substance introduced into the pretreatment zone is diverted from a nitrose-containing sulfuric acid which flows from the absorption zone into the SO₂-processing zone.

16. The process of either of claims 14 or 15, wherein at least a portion of the amount of nitrogen-oxygen compound to be introduced into the pretreatment zone consists of gaseous nitrogen oxides which are produced by the oxidation of ammonia and are introduced into the current of gas before this latter current enters the pretreatment zone.

17. The process of claim 15, wherein the content of nitrogen-oxygen compound in the nitrose-containing sulfuric acid taken from the absorption zone and being partly introduced into the main sector of the SO₂-processing zone and partly into the pretreatment zone is increased by the addition of nitric acid to the last-mentioned acid.

18. The process of any one of claims 1 to 17, wherein the density of the acid leaving the denitration zone is kept constant by the addition of dilute acid or water thereto.

19. The process of any one of claims 1 to 18, wherein the density of the dilute acid circulating through the main sector of the SO₂-processing zone is kept constant by the addition of acid from the pretreatment zone, or of water.

20. A plant for separating $SO_2$ from a current of gas which contains the same, at least intermittently, in a concentration which is impermissibly high for discharge into the ambient atmosphere, with attendant production of sulfuric acid by the nitrogen oxide process, which plant comprises, arranged in succession,

(a) a denitration zone (2),

(b) an SO₂-processing zone (3, 4), and

(c) a nitrogen oxide absorption zone (5, 6), each zone consisting of at least one gas-liquid reaction apparatus which is provided with a sump (21, 31, 41, 51) for taking up liquid which leaves the bottom of the apparatus concerned ; and furthermore

(d) a line for the current of gas (102, 22, 32, 42, 52, 72, 705) which is connected to one end of the denitration zone (2) and connects, in succession, the other end of this zone with the SO₂-processing zone (3, 4) and this latter zone with the nitrogen oxide absorption zone (5, 6) and finally leads from one end of this absorption zone into the surrounding atmosphere,

(e) a line for circulating dilute acid through the SO₂-processing zone (33, 43), and

(f) a line for circulating acid (54, 23) from the first sump (51), in the direction of flow of the current of gas, of the nitrogen oxide absorption zone (5, 6) to the top end of the denitration zone (2) and from the sump (21) of this zone (121, 63) to one end of a reaction apparatus (6) of the nitrogen oxide absorption zone (5, 6), said plant further comprising

(g) a feed line (37, 117) for nitrogen-oxygen compound in liquid (37) or gaseous (117) phase which feed line is connected to the line for circulating dilute acid (33, 43) through the SO₂-processing zone,

(h) a measuring device (285) for measuring the NO-content in the current of gas which device is connected to the absorption zone (5, 6) or to the line (d) for the current of gas downstream of the absorption zone or simultaneously to the absorption zone (5, 6) and to the line (72) downstream of the absorption zone (5, 6), and

(i) a control device (85) for adding nitrogen-oxygen compound through the feed line (37) contingent on the NO-contents determined by the measuring device (285).

21. The plant of claim 20, further comprising an NO₂-measuring device (255) for measuring the NO₂-content in the current of gas, said NO₂-measuring device being connected to the absorption zone (5, 6) or to the line (72) for the current of gas downstream of the absorption zone, and wherein said control device (k) comprises a superimposed control device which interrupts or reduces the supply of nitrogen-oxygen compound through the feed line (37, 117) contingent on the NO₂-content in the current of gas measured by the NO₂-measuring device.

22. The plant of either of claims 20 or 21, wherein the feed line (37, 117) serves for adding nitrogen-oxygen compound in the form of nitrose-containing sulfuric acid and is connected to the sump (51) of a reaction apparatus (5) of the nitrogen oxide absorption zone (5, 6).

23. The plant of claim 22, wherein said feed line (37) comprises means (83) for introducing nitric acid thereinto.

24. The plant of either of claims 22 or 23, further comprising a pretreatment zone (1) upstream of the denitration zone (2) with reaction apparatus and sump (71), whilst the line (102, 22) for the current of gas passes firstly into this pretreatment zone (1) at the lower end thereof and from the top end of this latter to the lower end of the denitration zone (2), and a separate line (73) for circulating dilute acid through the pretreatment zone from the top of the latter downward, an equalising line (133) between the sump of the pretreatment zone (71) and the sump of the denitration zone (21) and a branch line (78) from the feed line (37) to the upper end of the pretreatment zone (1).

25. The plant of either of claims 20 or 21, further comprising an ammonia oxidising unit (108) with a column (10) for at least the partial absorption of the nitrogen oxides formed therein by sulfuric acid, and with a second feed line (115, 117) which connects the lower end of the column (10) to the upper end of a first reaction apparatus (3) of the SO₂-processing zone (3, 4), in the direction of flow of the current of gas, said second feed line being adapted for introducing nitrogen oxide-containing sulfuric acid into the latter zone.

26. The plant of claim 25, further comprising a pretreatment zone (1) upstream of the denitration zone (2) with reaction apparatus and sump (71), a separate line (73) for circulating dilute acid through the pretreatment zone (1) from the top downward, as well as an equalising line (133) between the sump (71) of the pretreatment zone and sump of the denitration zone (21), wherein line (102, 22) of the current of gas passes firstly into the pretreatment zone (1) at the lower end thereof and from the top end of the latter zone to the bottom and of the denitration zone (2), and a line (12) for gases which contain nitrogen oxides and connecting the top end of said column (10) of said ammonia oxidation unit (108) to that part of said line (102, etc.) through which the current of gas is introduced into the bottom end of the pretreatment zone.

27. The plant of either of claims 25 or 26, wherein said feed line (37) is connected to the sump (51) of a reaction apparatus (5) of the nitrogen oxide absorption zone (5, 6), and further comprises a branch line (78, 106) connecting the feed line (37) with the top end of the column (10) of the ammonia oxidising unit (108).

28. The plant of claim 27, wherein said branch line (78) of the feed line (g) comprises a secondary branch line being connected to the top end of the pretreatment zone (1).

**Revendications**

1. Procédé pour séparer le $SO_2$ d'un courant gazeux contenant ce dernier au moins temporairement à une concentration inadmissiblement élevée pour rejeter dans l'atmosphère pendant la fabrication de l'acide sulfurique selon le procédé aux oxydes d'azote, dans lequel le gaz contenant le $SO_2$ traverse tout d'abord une zone de dénitration ou bien une zone de prétraitement servant comme zone de déshydratation du gaz, puis la zone de dénitration, ensuite la région principale de la zone de traitement du $SO_2$ constituée par au moins une tour à garnissage puis une zone d'absorption des oxydes d'azote, où dans au moins une des deux régions de la zone de traitement du $SO_2$, il est amené en contact avec de l'acide dilué ayant des concentrations inférieures à 70 % en poids (55° Baumé) de $H_2SO_4$ traversant la région en question de cette zone en circuit fermé, pendant que dans la zone d'absorption les oxydes d'azote libérés dans la zone de dénitration sont absorbés par l'acide sulfurique et que l'acide contenant des vapeurs nitreuses, ayant une teneur de 70 à 85 % en poids (55 à 63,5° Baumé) de $H_2SO_4$, est enlevé de la zone d'absorption et est conduit dans la zone de dénitration, ce procédé étant caractérisé par le fait que :

(a) la teneur en NO dans le courant gazeux est mesurée dans la zone d'absorption ou bien à la sortie de la zone d'absorption, ou en même temps aussi bien dans la zone d'absorption qu'à la sortie de celle-ci, et que

(b) en cas de dépassement d'une teneur limite en NO déterminée ou en cas de dépassement d'une valeur limite de la pente d'augmentation par unité de temps de la teneur en NO, dans le courant gazeux au point où NO est mesuré, une combinaison azote-oxygène (comme défini) est introduite par doses en une quantité déterminée dans le circuit d'acide dilué d'au moins une des deux régions de la zone de traitement de $SO_2$, qui d'une part suffit pour supprimer le dépassement de la teneur limite en NO, ou de la valeur limite de la pente, mentionnées, mais qui d'autre part reste proche des valeurs limites mentionnées, ce qui fait qu'une modification de la concentration de l'acide dans la zone d'absorption est pratiquement évitée, et ce qui fait que dans le cas où une combinaison gazeuse azote-oxygène est utilisée, celle-ci est tout d'abord dissoute dans l'acide dilué puis celui-ci est introduit par doses dans le circuit d'acide dilué, comme décrit ci-dessus.

2. Procédé selon la revendication 1, caractérisé par le fait que la quantité de la combinaison azote-oxygène ajoutée par doses est augmentée, à mesure que la teneur en NO du courant gazeux augmente dans la zone d'absorption ou après celle-ci.

3. Procédé selon la revendication 1, caractérisé par le fait que la vitesse d'apport de la combinaison azote-oxygène est maintenue constante, tant que la teneur en NO du courant gazeux dans, ou à la sortie de, la zone d'absorption dépasse la teneur limite en NO.

4. Procédé selon la revendication 1, caractérisé par le fait que la quantité de la combinaison azote-oxygène à ajouter par doses est augmentée à mesure qu'une valeur limite de la pente de l'augmentation, par unités de temps, de la teneur en NO dans le courant gazeux est dépassée dans, ou à la sortie de, la zone d'absorption.

5. Procédé selon la revendication 1, caractérisé par le fait que la quantité de la combinaison azote-oxygène à ajouter par doses est maintenue constante tant qu'une valeur limite de la pente de l'augmentation, par unité de temps, de la teneur en NO dans le courant gazeux est dépassée dans, ou à la sortie de, la zone d'absorption.

6. Procédé selon l'une quelconque des revendications 1 à 5, caractérisé par le fait que la combinaison azote-oxygène est constituée par de l'acide nitrique ou par des oxydes d'azote produits par la combustion de l'ammoniac.

7. Procédé selon l'une quelconque des revendications 1 à 6, caractérisé par le fait que la combinaison azote-oxygène mentionnée est formée par absorption des oxydes d'azote dans l'acide sulfurique.

8. Procédé selon l'une des revendications 2 et 3, caractérisé par le fait que l'addition par doses de la combinaison azote-oxygène est interrompue quand la teneur en NO du courant gazeux à la sortie de la zone d'absorption tombe au-dessous d'une valeur fixée qui est inférieure à la teneur limite en NO mentionnée précédemment.

9. Procédé selon l'une des revendications 4 et 5, caractérisé par le fait que l'addition par doses de la combinaison azote-oxygène est diminuée quand une valeur limite de la pente prédéterminée de la diminution, par unité de temps, de la teneur en NO dans le courant gazeux à la sortie de la zone d'absorption tombe à une valeur inférieure, étant donné que la valeur limite de la pente, mentionnée en dernier, correspond sensiblement à la valeur limite de la pente selon (b).

10. Procédé selon l'une quelconque des revendications 1 à 9, caractérisé par le fait

(a) en supplément, la concentration en $NO_2$ du courant gazeux est mesurée à la sortie de la zone d'absorption ;

(b) en cas de dépassement d'une teneur en $NO_2$ déterminée, ou en cas de dépassement d'une limite de la pente de l'augmentation de la teneur en $NO_2$ dans le courant gazeux au point de mesure de $NO_2$, l'addition par doses de la combinaison azote-oxygène dans le circuit d'acide dilué de la zone de traitement du $SO_2$ est interrompu.

11. Procédé selon la revendication 10, caractérisé par le fait que :

(c) en cas de dépassement d'une deuxième valeur limite supérieure de la teneur en $NO_2$ dans le courant gazeux à la sortie de la zone d'absorption, ou bien jusqu'au dépassement d'une deuxième limite supérieure de la pente de l'augmentation de la teneur en $NO_2$ dans le courant gazeux à la sortie de la zone d'absorption, la quantité d'acide contenant des vapeurs nitreuses sortant de cette dernière zone est augmentée et l'acide à faible teneur en vapeurs nitreuses, ou exempt de vapeurs nitreuses, provenant de la zone de dénitration est introduit dans la zone d'absorption.

12. Procédé selon l'une quelconque des revendications 1 à 11, caractérisé par le fait qu'au moins une partie de la combinaison azote-oxygène introduite dans la zone de traitement du $SO_2$ est constituée par de l'acide sulfurique contenant des vapeurs nitreuses enlevées de la zone d'absorption.

13. Procédé selon la revendication 12, caractérisé par le fait que la teneur en combinaison azote-oxygène de l'acide sulfurique contenant des vapeurs nitreuses, enlevé de la zone d'absorption et introduit par doses dans la zone de traitement du $SO_2$, est augmentée en ajoutant de l'acide nitrique.

14. Procédé selon l'une quelconque des revendications 1 à 12, caractérisé par le fait que, avant la zone de dénitration est montée une zone de prétraitement traversée par un circuit séparé d'acide dilué, à travers laquelle le courant gazeux est amené, avant d'être introduit dans la zone de dénitration et qu'une partie, ou la quantité totale, de la combinaison azote-oxygène est introduite dans cette zone de prétraitement.

15. Procédé selon la revendication 14, caractérisé par le fait que la fraction de la quantité totale ·de substance introduite dans la zone de prétraitement est prélevée à partir d'un acide sulfurique contenant des vapeurs nitreuses sortant de la zone d'absorption dans la zone de traitement du $SO_2$.

16. Procédé selon l'une des revendications 14 et 15, caractérisé par le fait qu'au moins une partie de la quantité de la combinaison azote-oxygène introduite dans la zone de prétraitement est constituée par des oxydes d'azote gazeux produits par la combustion de l'ammoniac et que ces oxydes d'azote sont introduits dans le courant gazeux avant son entrée dans la zone de prétraitement.

17. Procédé selon la revendication 15, caractérisé par le fait que la teneur en combinaison azote-oxygène de l'acide sulfurique contenant des vapeurs nitreuses, enlevé de la zone d'absorption et introduit en partie dans la région principale de la zone de traitement du $SO_2$ et en partie dans la zone de prétraitement, est augmentée en ajoutant de l'acide nitrique.

18. Procédé selon l'une quelconque des revendications 1 à 17, caractérisé par le fait que la densité de l'acide sortant de la zone de dénitration est maintenue constante en ajoutant de l'acide dilué ou de l'eau.

19. Procédé selon l'une quelconque des revendications 1 à 18, caractérisé par le fait que la densité de l'acide dilué traversant en circuit fermé la région principale de la zone de traitement du $SO_2$ est maintenue constante en ajoutant de l'acide sortant de la zone de prétraitement, ou de l'eau.

20. Installation pour séparer le $SO_2$ d'un courant gazeux contenant celui-ci, au moins temporairement en une concentration inadmissiblement élevée pour le rejeter dans l'atmosphère, pendant la fabrication de l'acide sulfurique selon le procédé aux oxydes d'azote, laquelle installation comprend au moins successivement :

(a) une zone de dénitration (2),

(b) une zone de traitement du $SO_2$ (3, 4) et

(c) une zone d'absorption des oxydes d'azote (5, 6), chaque zone étant équipée au moins d'un appareil laboratoire gaz-liquide, qui est muni d'un puisard (21, 31, 41, 51) pour recevoir le liquide sortant de la partie inférieure de l'appareil concerné.

(d) une conduite pour le courant gazeux (102, 22, 32, 42, 52, 62, 705) qui successivement pénètre à la partie inférieure de la zone de dénitration (2) et va de la partie supérieure de cette dernière jusqu'à la zone de traitement du $SO_2$ (3, 4) et de cette dernière jusqu'à la zone d'absorption des oxydes d'azote (5, 6) puis depuis la partie supérieure de cette dernière zone conduit à l'air libre ;

(e) un circuit fermé (33, 43) pour l'acide dilué traversant la zone de traitement du $SO_2$, et enfin

(f) un circuit fermé pour l'acide (54, 23) partant dans le sens du courant gazeux d'un premier puisard (51) de la zone d'absorption des oxydes d'azote (5, 6) jusqu'à l'extrémité supérieure de la zone de dénitration (2) et du puisard (21) de cette dernière zone revenant (121, 63) jusqu'à l'extrémité supérieure d'un appareil laboratoire (6) de la zone d'absorption des oxydes d'azote (5, 6), l'installation étant caractérisée par le fait que :

(g) au circuit fermé de l'acide dilué (33, 43) est raccordée à travers la zone de traitement du $SO_2$, une conduite d'arrivée (37, 117) pour la combinaison azote-oxygène en phase liquide (37) ou en phase gazeuse (117), que sont prévus :

(h) un dispositif de mesure (285), pour mesurer la teneur en NO dans le courant gazeux, qui est raccordé à la zone d'absorption (5, 6) ou à la conduite (d) pour le courant gazeux à la sortie de la zone d'absorption, ou bien en même temps à la zone d'absorption (5, 6) et à la conduite (72) à la sortie de la zone d'absorption (5, 6), et (i) un dispositif de réglage (85) qui dose l'addition de la combinaison azote-oxygène par la conduite d'arrivée (37) en fonction de la teneur en NO déterminée par le dispositif de mesure (285).

21. Installation selon la revendication 20, caractérisée par le fait qu'il est prévu un dispositif de mesure de NO$_2$ (255), pour mesurer la teneur en NO$_2$ dans le courant gazeux, qui est raccordé à la zone d'absorption (5, 6), ou à la conduite (72) pour le courant gazeux à la sortie de la zone d'absorption, et que le dispositif de régulation comprend :

(k) un dispositif de réglage principal qui interrompt ou diminue l'arrivée de la combinaison azote-oxygène par l'intermédiaire des conduites d'arrivée (37 et 117) en fonction de la teneur en NO$_2$ dans le courant gazeux mesuré par le dispositif pour NO$_2$.

22. Installation selon l'une des revendications 20 et 21, caractérisée par le fait que la conduite d'arrivée (37, 117), en vue de recevoir la combinaison azote-oxygène sous la forme d'acide sulfurique contenant des vapeurs nitreuses, est raccordée au puisard (51) d'un appareil laboratoire (5) de la zone d'absorption des oxydes d'azote (5, 6).

23. Installation selon la revendication 22, caractérisée par le fait que dans la conduite d'arrivée (37) est prévu un dispositif d'introduction (83) pour l'acide nitrique.

24. Installation selon l'une des revendications 22 et 23, qui comprend une zone de prétraitement (1) montée en aval de la zone de dénitration (2) avec l'appareil laboratoire et le puisard (71), où la conduite (102, 22) pour le courant gazeux conduit tout d'abord dans cette zone de prétraitement (1) à son extrémité inférieure et à partir de l'extrémité supérieure de cette dernière jusqu'à l'extrémité inférieure de la zone de dénitration (2) et où sont prévues une conduite (73) de circuit fermé, séparée, traversant de haut en bas la zone de prétraitement pour l'acide dilué ainsi qu'une conduite (133) de compensation entre les puisards (71) de la zone de prétraitement et (21) de la zone de dénitration, cette installation étant caractérisée par le fait qu'une conduite de dérivation (78) est prévue à partir de la conduite d'arrivée (37) jusqu'à la partie supérieure de la zone de prétraitement (1).

25. Installation selon l'une des revendications 20 et 21, caractérisée par le fait qu'il est prévu une installation (108) pour la combustion de l'ammoniac avec une colonne (10) servant à l'absorption au moins partielle des oxydes d'azote qui s'y dégagent, dans l'acide sulfurique, et qu'une conduite de pontage (115, 117) relie, dans le sens du courant gazeux, le pied de la colonne (10) à l'extrémité supérieure d'un premier appareil laboratoire (3) de la zone de traitement de SO$_2$ (3, 4) en vue d'amener l'acide sulfurique contenant des oxydes d'azote dans cette dernière zone.

26. Installation selon la revendication 25, qui comprend une zone de prétraitement (1) montée en aval de la zone de dénitration (2) avec un appareil laboratoire et un puisard (71), une conduite (73) de circuit fermé, séparée, traversant de haut en bas la zone de prétraitement (1) pour l'acide dilué, ainsi qu'une conduite (133) de compensation entre les puisards (71) de la zone de prétraitement et (21) de la zone de dénitration, où la conduite (102, 22) du courant gazeux conduit tout d'abord dans la zone de prétraitement (1) à l'extrémité inférieure de celle-ci et à partir de l'extrémité supérieure de cette dernière jusqu'à l'extrémité inférieure de la zone de dénitration (2), cette installation étant caractérisée par le fait qu'une conduite d'arrivée (12) pour les gaz contenant des oxydes d'azote relie l'extrémité supérieure de la colonne (10) de l'installation de combustion de l'ammoniac à la partie (102) de la conduite (102, etc.) introduisant le courant gazeux dans l'extrémité inférieure de la zone de prétraitement.

27. Installation selon l'une des revendications 25 et 26, caractérisée par le fait que la conduite d'arrivée (37), prévue pour recueillir la combinaison azote-oxygène sous la forme d'acide sulfurique contenant des vapeurs nitreuses, est raccordée au puisard (51) d'un appareil laboratoire (5) de la zone d'absorption des oxydes d'azote (5, 6) et qu'une conduite de dérivation (78, 106) conduit à partir de la conduite d'arrivée (37) jusqu'à l'extrémité supérieure de la colonne (10) de l'installation (108) de combustion de l'ammoniac.

28. Installation selon la revendication 27, caractérisée par le fait que la conduite de dérivation (78) est raccordée à partir de la conduite d'arrivée (37) à une autre dérivation secondaire à l'extrémité supérieure de la zone de prétraitement (1).

Fig.1

Fig. 2

3/5

Fig.3

Fig. 4

4/5 -

0 000 515

Fig. 5

5/5 –

0 000 515